(19) Europäisches Patentamt
European Patent Office
Office européen des brevets

(11) **EP 4 521 153 A2**

(12) **EUROPEAN PATENT APPLICATION**

(43) Date of publication:
**12.03.2025 Bulletin 2025/11**

(51) International Patent Classification (IPC):
**G02B 13/00** (2006.01)

(21) Application number: **24216575.1**

(22) Date of filing: **29.11.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.12.2023 CN 202311726667**

(71) Applicant: **Jiangxi OFILM Optical Co. Ltd.
Nanchang, Jiangxi 330096 (CN)**

(72) Inventors:
• **LIU, Binbin
Shenzhen, 518106 (CN)**
• **ZHANG, Chenglin
Nanchang, 330096 (CN)**

(74) Representative: **Zaboliene, Reda
Metida
Business center Vertas
Gyneju str. 16
01109 Vilnius (LT)**

(54) **OPTICAL SYSTEM, CAMERA MODULE, AND ELECTRONIC DEVICE**

(57) An optical system, a camera module, and an electronic device are disclosed. The optical system consists of eight lenses having refractive power. From an object side to the image side along an optical axis of the optical system, the optical system sequentially includes a first, third, fifth, and seventh lenses having a positive refractive power and a second, fourth, and eighth lenses having a negative refractive power. Object side surfaces of the first, second, third, fifth, sixth, and seventh lenses are all convex near the optical axis, and image side surfaces of the first, second, fourth, sixth, seventh, and eighth lenses and an object side surface of the eighth lens are all concave near the optical axis. By reasonable design of each lens of the optical system, the optical system meets requirements of miniaturization and has good imaging effect and characteristics of adjustable aperture.

FIG. 1

**Description**

FIELD

The subject matter relates to the field of optical imaging, and more particularly, to an optical system, a camera module, and an electronic device.

BACKGROUND

In recent years, electronic devices equipped with cameras, including portable information terminals such as smartphones, digital cameras, laptops, and tablet computers, have developed rapidly, and users have increasingly high requirements for the imaging quality of the cameras. In order to provide users with better photography experience and enable an optical system to capture images in different scenes or according to different requirements, the optical system should have variable aperture and good imaging effect.

However, the variable aperture and the combination of multiple lenses may increase the volume of the optical system, making the camera difficult to meet the trend of miniaturization.

SUMMARY

An object of the present disclosure is to provide an optical system, a camera module, and an electronic device to solve a problem that the optical system needs to be miniaturized, have good imaging effects and a variable aperture.

In order to achieve the object of the present disclosure, the present disclosure provides the following technical solutions:

In a first aspect, the present disclosure provides an optical system. The optical system consists of eight lenses with refractive power. From an object side to an image side along an optical axis, the optical system sequentially includes an adjustable aperture, a first lens, a second lens, a third lens, a fourth lens, a fifth lens, a sixth lens, a seventh lens, and an eighth lens. The adjustable aperture is configured for adjusting an aperture size. The first lens has a positive refractive power, an object side surface of the first lens is convex near the optical axis, and an image side surface of the first lens is concave near optical axis. The second lens has a negative refractive power, an object side surface of the second lens is convex near the optical axis, and an image side surface of the second lens is concave near the optical axis. The third lens has a positive refractive power, and an object side surface of the third lens is convex near the optical axis. The fourth lens has a negative refractive power, and an image side surface of the fourth lens is concave near the optical axis. The fifth lens has a positive refractive power, and an object side surface of the fifth lens is convex near the optical axis. The sixth lens has refractive power, an object side surface of the sixth lens is convex near the optical axis, and an image side surface of the sixth lens is concave near the optical axis. The seventh lens has a positive refractive power, an object side surface of the seventh lens is convex near the optical axis, an image side surface of the seventh lens is concave near the optical axis, and the image side surface of the seventh lens has at least one inflection point. The eighth lens has a negative refractive power, an object side surface of the eighth lens is concave near the optical axis, an image side surface of the eight lens is concave near the optical axis, and the image side surface of the eighth lens has at least one inflection point.

The optical system satisfies the following relational expressions: $73<FOV<95$, $1.2<TTL/ImgH<1.6$. Wherein, TTL is a distance from the object side surface of the first lens to an imaging surface of the optical system along the optical axis, ImgH is half of an image height corresponding to the maximum field of view of the optical system, and FOV is a maximum field of view of the optical system.

By setting the first lens to have a positive refractive power, the object side surface of the first lens to be convex near the optical axis, and the image side surface of the first lens to be concave near the optical axis, an incident angle of light on the object side surface of the first lens may be reduced, and the field of view of the optical system may be increased. Furthermore, rapid convergence of light may be avoided when light exits the first lens, light may be gently transmitted, and the optical system may be miniaturized. The second lens has a negative refractive power, the object side surface of the second lens is convex near the optical axis, and the image side surface of the second lens is concave near the optical axis, which is favorable for correcting aberration generated by the first lens may be corrected and improving the imaging quality. The third lens has a positive refractive power, and the object side surface of the third lens is convex near the optical axis, so that shapes of the second lens may be adapted to shapes of the third lens, the aberration may be corrected again, light may be gently transmitted, and excessive bending of the second lens may be avoided. The fourth lens has a negative refractive power, and the image side surface of the fourth lens is convex near the optical axis, which is favorable for correcting the distortion, spherical aberration and astigmatism produced by lens on the object side of the fourth lens and reducing the incident angle of the gradually expanding light at the fourth lens. Thus, the transmittance may be improved. The fifth lens has a positive refractive power and the object side of the fifth lens is convex near the optical axis, which is favorable for correcting the distortion, spherical aberration and astigmatism produced by the fourth lens, and reducing the incident angle of the gradually expanding light at the fifth lens. Thus, the transmittance rate may be improved. The above settings may allow the first to fifth lenses to form a double Gaussian structure, and the workload of the sixth to eighth lenses may be reduced, thereby avoiding excessive curvature of the surface shape, and improving the molding quality of the lens. The sixth lens, the seventh lens and the eighth lens respectively have negative refractive power, positive refractive power and negative refractive power, which can effectively eliminate axial chromatic aberration. The object side surfaces of the sixth and seventh lenses are convex near the optical axis, and the image side surfaces of the sixth and seventh lenses are concave near the optical axis, so that the surface shapes of the two lenses are adapted to each other, mutual interference between the two lenses may be avoided, a deflection angle of light may be reduced when light passes through the two lenses, and the transmittance may be improved. The object side surface and the image side surface of the eighth lens are both concave near the optical axis, which can balance the convergence of light when light is converged by the sixth lens and the seventh lens and can avoid rapid convergence of the image. Thus, an off-axis inflection point may be formed, and excessive curvature of surface shape of the lens may be avoided. The object side surface and the image side surface of the seventh lens have at least one inflection point, and the object side surface and the image side surface of the eighth lens have at least one inflection point, so that off-axis aberrations such as field curvature may be corrected, the incident angle of light on the imaging surface may be compressed, and the imaging quality and the relative illumination may be improved.

By satisfying the following relational expression: 1.2<TTL/ImgH<1.6, a ratio of the distance from the object side surface of the first lens to the imaging surface of the optical system along the optical axis to half of the image height corresponding to the maximum field of view of the optical system is reasonably limited. Thus, the resolution of the optical system in the full field of view may be improved, the imaging quality of the edge field of view may be improved, and the optical system may have a smaller total optical length and characteristic of miniaturization.

By satisfying the relational expression: 73<FOV<95, the maximum field of view of the optical system is controlled within a reasonable range, which can avoid the introduction of excessive aberrations. Thus, the optical system may obtain sufficient field of view and meet the requirements of miniaturization.

In the second aspect, the present disclosure further provides a camera module. The camera module includes a photosensitive chip and the optical system mentioned in any one of the embodiments of the first aspect. The photosensitive chip is located on the image side of the optical system. A photosensitive surface of the photosensitive chip is located on the imaging surface of the optical system, and light of an object that passes through lenses and is incident on the photosensitive surface can be converted into an electrical signal of an image. The photosensitive chip may be a complementary metal oxide semiconductor CMOS or a charge-coupled device CCD. The camera module may be an imaging module integrated in an electronic device or an independent lens. By adding the optical system provided by the present disclosure to the camera module, a surface shape and refractive power of each lens in the optical system can be reasonably designed, so that the camera module can meet the requirement of miniaturization and have good imaging effect and characteristics of adjustable aperture.

In a third aspect, the present disclosure further provides an electronic device. The electronic device includes a housing and the camera module mentioned in the second aspect, and the camera module is located in the housing. The electronic device includes but is not limited to a smart phone, a computer, and a smart watch. By adding the camera module provided by the present disclosure to the electronic device, the electronic device can meet the requirement of miniaturization and have good imaging effect and characteristics of adjustable aperture.

BRIEF DESCRIPTION OF THE DRAWINGS

In order to more clearly describe the technical solutions in implementations of the present disclosure or the prior art, the following will briefly introduce the drawings that need to be used in the description of the implementations or the prior art. Obviously, the drawings in the following description are only some implementations of the present disclosure. For those of ordinary skill in the art, other drawings can be obtained based on these drawings without creative work.

FIG. 1 is a schematic diagram of an optical system in a first aperture state according to a first embodiment.
FIG. 2 shows a longitudinal spherical aberration curve diagram, an astigmatism curve diagram, and a distortion curve diagram of FIG. 1.
FIG. 3 is a schematic diagram of an optical system in a second aperture state according to a first embodiment.
FIG. 4 shows a longitudinal spherical aberration curve diagram, an astigmatism curve diagram, and a distortion curve diagram of FIG. 3.
FIG. 5 is a schematic diagram of an optical system in a third aperture state according to a first embodiment.
FIG. 6 shows a longitudinal spherical aberration curve diagram, an astigmatism curve diagram, and a distortion curve diagram of FIG. 5.
FIG. 7 is a schematic diagram of an optical system in a first aperture state according to a second embodiment.
FIG. 8 shows a longitudinal spherical aberration curve diagram, an astigmatism curve diagram, and a distortion curve diagram of FIG. 7.

FIG. 9 is a schematic diagram of an optical system in a first aperture state according to a third embodiment.

FIG. 10 shows a longitudinal spherical aberration curve diagram, an astigmatism curve diagram, and a distortion curve diagram of FIG. 9.

FIG. 11 is a schematic diagram of an optical system in a first aperture state according to a fourth embodiment.

FIG. 12 shows a longitudinal spherical aberration curve diagram, an astigmatism curve diagram, and a distortion curve diagram of FIG. 11.

FIG. 13 is a schematic diagram of an optical system in a first aperture state according to a fifth embodiment.

FIG. 14 shows a longitudinal spherical aberration curve diagram, an astigmatism curve diagram, and a distortion curve diagram of FIG. 13.

FIG. 15 is a schematic diagram of an optical system in a first aperture state according to a sixth embodiment.

FIG. 16 shows a longitudinal spherical aberration curve diagram, an astigmatism curve diagram, and a distortion curve diagram of FIG. 15.

FIG. 17 is a schematic diagram of an optical system in a first aperture state according to a seventh embodiment.

FIG. 18 shows a longitudinal spherical aberration curve diagram, an astigmatism curve diagram, and a distortion curve diagram of FIG. 17.

FIG. 19 is a schematic diagram of a camera module according to an embodiment the present disclosure.

FIG. 20 is a schematic diagram of an electronic device according to an embodiment of the present disclosure.

## DETAILED DESCRIPTION

Implementations of the present disclosure will now be described, by way of embodiments, with reference to the above figures. The embodiments are obviously a portion but not all of the embodiments of the present disclosure. Based on the embodiments of the present disclosure, other embodiments obtained by ordinary skill in the art without creative work will still fall within the scope of protection of the present disclosure.

In a first aspect, the present disclosure provides an optical system. The optical system consists of eight lenses with refractive power. From an object side to an image side along an optical axis, the eight lenses sequentially includes an adjustable aperture, a first lens, a second lens, a third lens, a fourth lens, a fifth lens, a sixth lens, a seventh lens, and an eighth lens. The adjustable aperture is configured for adjusting an aperture size. The first lens has a positive refractive power, an object side surface of the first lens is convex near the optical axis, and an image side surface of the first lens is concave near optical axis. The second lens has a negative refractive power, an object side surface of the second lens is convex near the optical axis, and an image side surface of the second lens is concave near the optical axis. The third lens has a positive refractive power, and an object side surface of the third lens is convex near the optical axis. The fourth lens has a negative refractive power, and an image side surface of the fourth lens is concave near the optical axis. The fifth lens has a positive refractive power, and an object side surface of the fifth lens is convex near the optical axis. The sixth lens has refractive power, an object side surface of the sixth lens is convex near the optical axis, and an image side surface of the sixth lens is concave near the optical axis. The seventh lens has a positive refractive power, an object side surface of the seventh lens is convex near the optical axis, an image side surface of the seventh lens is concave near the optical axis, and the image side surface of the seventh lens has at least one inflection point. The eighth lens has a negative refractive power, an object side surface of the eighth lens is concave near the optical axis, an image side surface of the eight lens is concave near the optical axis, and the image side surface of the eighth lens has at least one inflection point.

By setting the first lens to have a positive refractive power, the object side surface of the first lens to be convex near the optical axis, and the image side surface of the first lens to be concave near the optical axis, an incident angle of light on the object side surface of the first lens may be reduced, and the field of view of the optical system may be increased. Furthermore, rapid convergence of light may be avoided when light exits the first lens, light may be gently transmitted, and the optical system may be miniaturized. The second lens has a negative refractive power, the object side surface of the second lens is convex near the optical axis, and the image side surface of the second lens is concave near the optical axis, which is favorable for correcting aberration generated by the first lens may be corrected and improving the imaging quality. The third lens has a positive refractive power, and the object side surface of the third lens is convex near the optical axis, so that shapes of the second lens may be adapted to shapes of the third lens, the aberration may be corrected again, light may be gently transmitted, and excessive bending of the second lens may be avoided. The fourth lens has a negative refractive power, and the image side surface of the fourth lens is convex near the optical axis, which is favorable for correcting the distortion, spherical aberration and astigmatism produced by lens on the object side of the fourth lens and reducing the incident angle of the gradually expanding light at the fourth lens. Thus, the transmittance may be improved. The fifth lens has a positive refractive power and the object side of the fifth lens is convex near the optical axis, which is favorable for correcting the distortion, spherical aberration and astigmatism produced by the fourth lens, and reducing the incident angle of the gradually expanding light at the fifth lens. Thus, the transmittance rate may be improved. The above configuration may allow the first to fifth lenses to form a double Gaussian structure as a whole, and the workload of the sixth to eighth lenses may be reduced, thereby avoiding excessive curvature of the surface shape, and improving the molding quality of the lens. The sixth lens, the seventh lens and the eighth lens respectively have negative refractive power, positive refractive power and negative refractive power, which can effectively eliminate axial chromatic aberration. The object side surfaces of the sixth and seventh lenses are convex near the optical axis, and the image side surfaces of the sixth and seventh lenses are concave near the optical axis, so that the surface shapes of the two lenses are adapted to each other, mutual interference between the two lenses may be avoided, a deflection angle of light may be reduced when light passes through the two lenses, and the transmittance may be improved. The object side surface and the image side surface of the eighth lens are both concave near the optical axis, which can balance the convergence of light when light is converged by the sixth lens and the seventh lens and can avoid rapid convergence of the image. Thus, an off-axis inflection point may be formed, and excessive curvature of surface shape of the lens may be avoided. The object side surface and the image side surface of the seventh lens have at least one inflection point, and the object side surface and the image side surface of the eighth lens have at least one inflection point, so that off-axis aberrations such as field curvature may be corrected, the incident angle of light on the imaging surface may be compressed, and the imaging quality and the relative illumination may be improved.

The optical system satisfies the following relational expression: $1.2<TTL/ImgH<1.6$. Wherein, TTL is a distance from the object side surface of the first lens to the imaging surface of the optical system along the optical axis, and ImgH is half of an image height corresponding to the maximum field of view of the optical system. By satisfying the above relational expression, the total length and image height of the optical system is reasonably configured, which is favorable for improving the resolution of the full field of view of the optical system, improving the imaging quality of the edge field of view, and reducing the total optical length of the optical system to achieve miniaturization. Furthermore, the optical system satisfies the relational expression: $1.24<TTL/ImgH<1.55$, and the imaging quality may be better.

The optical system satisfies the following relational expression: $73deg<FOV<95deg$. Wherein, FOV is the maximum field of view of the optical system. By satisfying the above relational expression, the maximum field of view of the optical system is controlled within a reasonable range, which can avoid the introduction of excessive aberrations. Thus, the optical system may obtain sufficient field of view and meet the requirements of miniaturization. Furthermore, the optical system satisfies the relational expression: $77deg<FOV<90deg$, and the imaging quality may be better.

In one embodiment, the optical system satisfies the following relational expression: $0.8<f1/f<1.5$. Wherein, f1 is an effective focal length of the first lens, and f is an effective focal length of the optical system. By satisfying the above relational expression, the first lens has proper refractive power in the optical system, and the surface design of the first lens becomes simpler and more flexible, so that the first lens can support a larger field of view and a large aperture. At the same time, light incidents from the first lens to the optical system may be easily converged, an incident angle of the light may be delayed, aberrations may be reduced, and the balance of the aberration correction and imaging quality of the overall optical system may be simplified. Furthermore, the optical system satisfies the following relational expression: $0.9<f1/f<1.4$, and the imaging quality may be better.

In one embodiment, the optical system satisfies the following relational expression: $f2/f<-2$. Wherein, f2 is an effective focal length of the second lens. By satisfying the above relational expression, the second lens has proper refractive power in the optical system, the surface design of the second lens becomes simpler and more flexible, so that the aberrations may be reduced, and the balance of the aberration correction and imaging quality of the overall optical system may be simplified. Furthermore, the optical system satisfies the following relational expression: $-11<f2/f<-2.5$, and the imaging quality may be better.

In one embodiment, the optical system satisfies the following relational expression: $3<f3/f$. Wherein, f3 is an effective focal length of the third lens. By satisfying the above relational expression, the third lens has proper refractive power in the optical system, the surface design of the third lens becomes simpler and more flexible, the aberration may be reduced, and the balance of the aberration correction and imaging quality of the overall optical system may be simplified. Furthermore, the optical system satisfies the following relational expression: $-4<f3/f$, and the imaging quality may be better.

In one embodiment, the optical system satisfies the following relational expression: $f4/f<-1.5$. Wherein, f4 is an effective focal length of the fourth lens. By satisfying the above relational expression, the fourth lens and the above three lenses form a double Gaussian structure, which can eliminate aberrations while allowing light to be gently transmitted to subsequent lenses. Furthermore, the optical system satisfies the following relational expression: $-13<f4/f<-2$, and the imaging quality may be better.

In one embodiment, the optical system satisfies the following relational expression: $2<f5/f$. Wherein, f5 is an effective focal length of the fifth lens. The above relational expression allows the fifth lens to gently diffuse light, which forms basis for subsequent imaging on large imaging surface. Furthermore, the optical system satisfies the following relational expression: $3<f5/f<7$, and the imaging quality may be better.

In one embodiment, the optical system satisfies the following relational expression: $9<|f6|/f$. Wherein, f6 is an effective focal length of the sixth lens. The above relational expression allows the sixth lens to balance the aberrations of the lenses in front of the sixth lens, and the imaging quality may be improved. Furthermore, the optical system satisfies the following relational expression: $18<|f6|/f$, and the imaging quality may be better.

In one embodiment, the optical system satisfies the following relational expression: $1<f7/f<1.6$. Wherein, f7 is an effective focal length of the seventh lens. The above relational expression allows the seventh lens to shorten a back focal length, thereby achieving miniaturization design of the optical system. Furthermore, the optical system satisfies the following relational expression: 1.1<f7/f<1.5, and the imaging quality may be better.

In one embodiment, the optical system satisfies the following relational expression: -1.3<f8/f<-0.6. Wherein, f8 is an effective focal length of the eighth lens. By satisfying the above relational expression, the eighth lens may cooperate with the lenses in front of the eight lens to eliminate chromatic aberration, and the miniaturization design of the optical system may be achieved. Furthermore, the optical system satisfies the following relational expression: -1.2<f8/f<-0.7, and the imaging quality may be better.

R2n-1 is defined as a curvature radius of an object side surface of the nth lens on the optical axis, and R2n is defined as a curvature radius of an image side surface of the nth lens on the optical axis, wherein n is any integer from 1 to 8. Specifically, a curvature radius of the object side surface of the first lens on the optical axis is R1, a curvature radius of the image side surface of the first lens on the optical axis is R2, and so on.

In one embodiment, the optical system satisfies the following relational expression: 0.3<R1/f<0.7. In one embodiment, the optical system satisfies the following relational expression: 1.3<R2/f<2.6. Any above relational expression may allow the first lens to maintain reasonable astigmatism, so that the optical system can have good imaging quality. Furthermore, the optical system satisfies the following relational expression: 0.4<R1/f<0.55 or 1.45<R2/f<2.4, and the imaging quality may be better.

In one embodiment, the optical system satisfies the following relational expression: 0.7<R3/f<2.2. In one embodiment, the optical system satisfies the following relational expression: 0.7<R4/f<1.2. Any above relational expression may allow the second lens to maintain reasonable astigmatism and further balance the astigmatism generated by the first lens, so that the optical system can have good imaging quality. Furthermore, the optical system satisfies the following relational expression: 0.9<R3/f<2 or 0.8<R4/f<1, and the imaging quality may be better.

In one embodiment, the optical system satisfies the following relational expression: 2.5<R5/f<5. In one embodiment, the optical system satisfies the following relational expression: 3<|R6|/f. Any above relational expression may allow the third lens to maintain reasonable surface shape and further balance the aberrations generated by the first lens and the second lens, so that the optical system can have good imaging quality. Furthermore, the optical system satisfies the following relational expression: 3<R5/f<4 or 3.9<|R6|/f, and the imaging quality may be better.

In one embodiment, the optical system satisfies the following relational expression: 2.4<|R7|/f. In one embodiment, the optical system satisfies the following relational expression: 1.6<R8/f<2.5. Any above relational expression may allow the fourth lens to maintain reasonable surface shape and to cooperate with the first to third lenes to form a double Gaussian structure, so that the optical system can have good imaging quality. Furthermore, the optical system satisfies the following relational expression: 2.7<|R7|/f or 1.8<R8/f<2.3, and the imaging quality may be better.

In one embodiment, the optical system satisfies the following relational expression: 2.3<R9/f<4. In one embodiment, the optical system satisfies the following relational expression: R10/f<-3. Any above relational expression may allow the fifth lens to maintain reasonable refractive power other than strong refractive power, such that the fifth lens may gently receive the light from the object side, and the optical system can have good imaging quality. Furthermore, the optical system satisfies the following relational expression: 2.6<R9/f<3.7 or R10/f<-4, and the imaging quality may be better.

In one embodiment, the optical system satisfies the following relational expression: 1.9<R11/f<3. In one embodiment, the optical system satisfies the following relational expression: 1.7<R12/f<3. Any above relational expression may allow the sixth lens to maintain reasonable surface shape. Thus, balance may be obtained between the overall performance of the sixth lens and the seventh and eighth lenses to correct aberrations, so that the optical system can have good imaging quality. Furthermore, the optical system satisfies the following relational expression: 2.1<R11/f<2.8 or 1.9<R12/f<2.5, and the imaging quality may be better.

In one embodiment, the optical system satisfies the following relational expression: 0.25<R13/f<0.5. In one embodiment, the optical system satisfies the following relational expression: 0.5<R14/f<1.1. Any above relational expression may allow the seventh lens to maintain reasonable surface shape. Thus, balance may be obtained between the overall performance of the seventh lens and the sixth and eighth lenses to correct aberrations, so that the optical system can have good imaging quality. Furthermore, the optical system satisfies the following relational expression: 0.3<R13/f<0.45 or 0.6<R14/f<0.9, and the imaging quality may be better.

In one embodiment, the optical system satisfies the following relational expression: -7<R15/f<-2.5. In one embodiment, the optical system satisfies the following relational expression: 0.3<R16/f<0.9. Any above relational expression may allow the eighth lens to maintain reasonable surface shape. Thus, balance may be obtained between the overall performance of the eighth lens and the sixth and seventh lenes to correct aberrations, so that the optical system can have good imaging quality. Furthermore, the optical system satisfies the following relational expression: -5<R15/f<-3 or 0.4<R16/f<0.8, and the imaging quality may be better.

In one embodiment, the optical system satisfies the following relational expression: -10<R15/R16<-4. By satisfying the above relational expression, a ratio of the curvature radius of the object side surface at the optical axis to the curvature radius of the image side surface of the eighth lens at the optical axis is reasonably limited, so that the difference in the curvature radius of the two surfaces may be reasonably limited, the refractive power may be controlled within a reasonable range, the deflection angle of the full field of view light in the optical system may be reduced, and the generation and correction of aberrations may be controlled. Furthermore, the optical system satisfies the following relational expression: -8<R15/R16<-5, and the imaging quality may be better.

In one embodiment, the optical system satisfies the following relational expression: 6<(R11+R12)/(R11-R12). By satisfying the above relational expression, the astigmatism of the optical system may be effectively corrected, the difference in the surface shapes of the two surfaces will not be too large, and the incident angle of light at the two surfaces may be reduced. Furthermore, the optical system satisfies the following relational expression: 9<(R11+R12)/(R11-R12), and the imaging quality may be better.

In one embodiment, the optical system satisfies the following relational expression: 1. 15<f12/f<1.7. Wherein, f12 is a combined effective focal length of the first lens and the second lens. By satisfying the above relational expression, the first lens and the second lens may coordinate with each other to control the aberration, light incident at a large angle may be received, and the incident light may gently enter the optical system, thereby reducing the tolerance sensitivity of the optical system. Furthermore, the optical system satisfies the following relational expression: 1.35<f12/f<1.5, and the imaging quality may better.

In one embodiment, the optical system satisfies the following relational expression: 6<f345/f. Wherein, f345 is a combined effective focal length of the third lens, the fourth lens, and the fifth lens. By satisfying the above relational expression, the third lens to the fifth lens may coordinate with each other to eliminate chromatic aberration step by step, and thus improving the imaging quality. Furthermore, the optical system satisfies the following relational expression: 9<f345/f.

In one embodiment, the optical system satisfies the following relational expression: 3<|f678|/f. Wherein, f678 is a combined effective focal length of the sixth lens, the seventh lens, and the eighth lens. By satisfying the above relational expression, the sixth lens to the eighth lens may coordinate with each other to eliminate chromatic aberration step by step, the back focus may be adjusted, and the off-axis aberration and the incident angle of light on the imaging surface is controlled. Furthermore, the optical system satisfies the following relational expression: 3.8<|f678|/f, and the imaging quality may be better.

In one embodiment, the optical system satisfies the following relational expression: 8<FOV/(FNOmax-FNOmin) <37. Wherein, FOV is the maximum field of view of the optical system, FNOmax is the maximum aperture number of the optical system, and FNOmin is the minimum aperture number of the optical system. By satisfying the above relational expression, the optical system may have a larger field of view, and the aperture number of the optical system may be maintained within a reasonable range, so that a combined effect of a larger field of view and a large aperture in the optical system may be achieved, the optical system may have a reasonable amount of light input, the overall illumination of an imaging picture may be improved, and the optical system may be suitable for different lighting environments. Furthermore, the optical system satisfies the following relational expression: 28<FOV/(FNOmax-FNOmin)<35, and the imaging quality may be better.

In one embodiment, the optical system satisfies the following relational expression: 0.83<DL/TTL<0.92. Wherein, DL is a distance from the object side surface of the first lens to the image side surface of the eighth lens along the optical axis, and TTL is a distance from the object side surface of the first lens to the imaging surface of the optical system along the optical axis. By satisfying the above relational expression, a ratio of the distance from the object side surface of the first lens to the image side surface of the eighth lens along the optical axis to the distance from the object side surface of the first lens to the imaging surface of the optical system along the optical axis may be reasonably limited. On the premise of miniaturizing the optical system, the distance from the image side surface of the eighth lens to the imaging surface of the optical system along the optical axis may be increased, thereby increasing the layout space of a module structure end. Furthermore, the optical system satisfies the following relational expression: 0.85<DL/TTL<0.9, and the imaging quality may be better.

In one embodiment, the optical system satisfies the following relational expression: 1.2<TTL/f<1.32. By satisfying the above relational expression, a ratio of the distance from the object side surface of the first lens to the imaging surface of the optical system along the optical axis to the effective focal length of the optical system is reasonably limited, so that the optical system can have a smaller total optical length, characteristics of miniaturization can be realized, and the optical system can have a better telephoto effect. Furthermore, the optical system satisfies the following relational expression: 1.22<TTL/f<1.3, and the imaging quality may be better.

In one embodiment, the optical system satisfies the following relational expression: 0.7<ImgH/f<1.1. Wherein, ImgH is half of the image height corresponding to the maximum field of view of the optical system. By satisfying the above relational expression, the refractive power of the optical system may be matched with a size of the imaging surface, thereby improving the imaging quality of the optical system. Furthermore, the optical system satisfies the following relational expression: 0.82<ImgH/f<1, and the imaging quality may be better.

In one embodiment, the optical system satisfies the following relational expression: 3<f8/SAG81<7. In one embodiment, the optical system satisfies the following relational expression: 3<f8/SAG82<7. Furthermore, the optical system satisfies the following relational expression: 3<f8/SAG82<6.3. Wherein, SAG81 is a sagittal height of the object side surface of the eighth lens at the maximum effective aperture, and SAG82 is a sagittal height of the image side of the eighth lens at the maximum effective aperture. Any above relational expression may allow the effective focal length of the eighth lens and the surface shape of the object side surface of the eighth lens may be reasonably set, which is favorable for minimizing chromatic aberration and spherical aberration, thereby improving the imaging quality of the optical system. In addition, the refractive power of the eighth lens may be reasonably distributed, the light collecting ability of the optical system may be enhanced, the total length of the optical system may be reduced, and the miniaturization of the optical system may be realized. Furthermore, the optical system satisfies the following relational expression: 3.5<f8/SAG81<5.5, and the imaging quality may be better.

CTn is defined as the thickness of the nth lens on the optical axis, wherein n is any integer from 1 to 8. Specifically, a thickness of the first lens on the optical axis is CT1, a thickness of the second lens on the optical axis is CT2, and so on.

In one embodiment, the optical system satisfies the following relational expression: -7<(SAG81+SAG82)/CT8<-3.5. By satisfying the above relational expression, the refractive power and thickness of the eighth lens at various locations in a direction perpendicular to the optical axis may be reasonably controlled, thereby preventing the eighth lens from being too thick or too thin, reducing the incident angle of light on the object side of the eighth lens, and reducing the tolerance sensitivity of the optical system. In addition, the eighth lens has multiple inflection points, which is conducive to correcting the distortion and field curvature produced by lenses on the object side of the eighth lens, so that the refractive power of multiple lenses close to the imaging surface of the optical system can be evenly distributed. Furthermore, the optical system satisfies the following relational expression: -6.5<(SAG81+SAG82)/CT8<-4, and the imaging quality may be better.

In one embodiment, the optical system satisfies the following relational expression: 0.5<Yc72/SD72<0.7. Wherein, Yc72 is a vertical height from an off-axis vertex of the image side surface of the seventh lens to the optical axis, and SD72 is the maximum effective aperture of the image side surface of the seventh lens. By satisfying the above relational expression, the refractive power and thickness of the seventh lens at various locations in a direction perpendicular to the optical axis may be reasonably controlled, thereby preventing the seventh lens from being too thick or too thin, reducing the incident angle of light on the object side surface of the seventh lens, and reducing the tolerance sensitivity of the optical system. Furthermore, the optical system satisfies the following relational expression: 0.55<Yc72/SD72<0.65, and the imaging quality may be better.

In one embodiment, the optical system satisfies the following relational expression: 0.25<Yc82/SD82<0.45. Wherein, Yc82 is a vertical height from an off-axis vertex of the image side surface of the eighth lens to the optical axis, and SD82 is the maximum effective aperture of the image side surface of the eighth lens. By satisfying the above relational expression, the refractive power and thickness of the eighth lens at various locations in a direction perpendicular to the optical axis may be reasonably controlled, thereby preventing the eighth lens from being too thick or too thin, reducing the incident angle of light on the object side surface of the eighth lens, and reducing the tolerance sensitivity of the optical system. Furthermore, the optical system satisfies the following relational expression: 0.3<Yc82/SD82<0.4, and the imaging quality may be better.

In one embodiment, the optical system satisfies the following relational expression: 3.5<CT1/CT2<5.5. By satisfying the above relational expression, a double Gaussian structure may be formed. Furthermore, the optical system satisfies the following relational expression: 4<CT1/CT2<5, and the imaging quality may be better.

In one embodiment, the optical system satisfies the following relational expression: 1<CT4/CT3<1.3. By satisfying the above relational expression, the double Gaussian structure may be formed. Furthermore, the optical system satisfies the following relational expression: 1.1<CT4/CT3<1.2, and the imaging quality may be better.

In one embodiment, the optical system satisfies the following relational expression: 1.5<CT5/CT4<2.2. By satisfying the above relational expression, the double Gaussian structure may be formed. Furthermore, the optical system satisfies the following relational expression: 1.7<CT5/CT4<2, and the imaging quality may be better.

In one embodiment, the optical system satisfies the following relational expression: 1.15<CT5/CT6<1.8. By satisfying the above relational expression, the size difference of the lenses will not be too large, which is conducive to the smooth transmission of the expanded light, avoids the introduction of excessive aberrations, and is conducive to spatial arrangement of the lenses. Furthermore, the optical system satisfies the following relational expression: 1.3<CT5/CT6<1.65, and the imaging quality may be better.

In one embodiment, the optical system satisfies the following relational expression: 0.5<CT8/CT7<1.1. By satisfying the above relational expression, the thickness of the two lenses is adapted to each other, which is favorable for reducing the overall thickness and preventing a single lens from being too thin, resulting in a reduced yield rate. Further, when the optical system satisfies the following relational expression: 0.6<CT8/CT7<0.9, the imaging quality may be better.

In one embodiment, the optical system satisfies the following relational expression: 0.6<(CT1+CT2)/(CT3+CT4+CT5)<0.9. By satisfying the above relational expression, the double Gaussian structure may be formed. Furthermore, the optical system satisfies the following relational expression:

0.7<(CT1+CT2)/(CT3+CT4+CT5)<0.82, and the imaging quality may be better.

ATnm is defined as a distance between the nth lens and the mth lens along the optical axis, wherein n is any integer from 1 to 7, and m=n+1. Specifically, a distance between the first lens and the second lens along the optical axis is AT12, and so on.

In one embodiment, the optical system satisfies the following relational expression: 2.1<AT23/(AT12+AT34) <3.1. By satisfying the above relational expression, gaps between lenses may be reasonably controlled, so that the imaging quality and assemblability may be improved, and the double Gaussian structure may be formed. Furthermore, the optical system satisfies the following relational expression: 2.3<AT23/(AT12+AT34)<2.9, and the imaging quality may be better.

ETn is defined as a distance between a position where the object side surface of the nth lens has the maximum effective aperture and a position where the image side surface of the nth lens has the maximum effective aperture along the optical axis, wherein n is any integer from 1 to 8. Specifically, a distance between the maximum effective aperture of the object side surface of the first lens and the maximum effective aperture of the image side surface of the second lens along the optical axis is ET1, and so on.

In one embodiment, the optical system satisfies the following relational expression: 1<ET7/ET6<1.9. By satisfying the above relational expression, the spatial arrangement of the lenses may be good. Furthermore, the optical system satisfies the following relational expression: 1.15<ET7/ET6<1.75, and the imaging quality may be better.

In one embodiment, the optical system satisfies the following relational expression: 1<ET7/CT7<1.6. By satisfying the above relational expression, excessive thickness ratio of the lens may be avoided. Furthermore, the optical system satisfies the following relational expression: 1.1<ET7/CT7<1.42, and the imaging quality may be better.

In one embodiment, the optical system satisfies the following relational expression: 0.7<AT78/CT1<1.2. By satisfying the above relational expression, space utilization may be improved, and excessive bending of the seventh lens and the eighth lens may be avoided. Furthermore, the optical system satisfies the following relational expression: 0.85<f1T78/CT1<1, and the imaging quality may better.

In some embodiments, the optical system further includes an optical filter. The optical filter may be an infrared cut-off filter or an infrared bandpass filter. The infrared cut-off filter is used to filter out infrared light. The infrared bandpass filter only allows infrared light to pass through. In this disclosure, the optical filter is an infrared cut-off filter, which is fixedly arranged relative to each lens in the optical system and is configured to prevent infrared light from reaching the imaging surface of the optical system and interfering with normal imaging. The optical filter can be assembled with each lens as a part of the optical system. In other embodiments, the optical filter can also be an independent component of the optical system. The optical filter can be installed between the optical system and the photosensitive chip during the assembly of the optical system and the photosensitive chip. The optical filter may be made of optical glass with coating. The optical filter may also be made of colored glass. The optical filter may also be made of other materials, which are selected according to actual needs. In other embodiments, the filtering effect of infrared light can also be achieved by setting a filter coating on at least one of the first to eighth lenses.

First embodiment

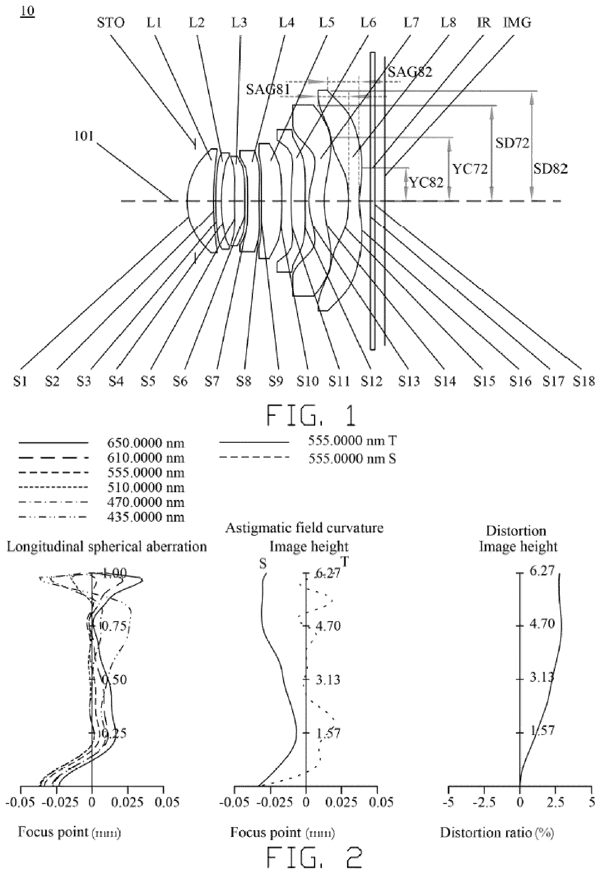

Referring to FIG. 1, FIG. 2, and FIG. 5, an optical system 10 sequentially includes a first lens L1, a second lens L2, a third lens L3, a fourth lens L4, a fifth lens L5, a sixth lens L6, a seventh lens L7, and an eighth lens L8 from an object side to an image side along an optical axis 101.

The first lens L1 has a positive refractive power, an object side surface S1 of the first lens L1 is convex near an optical axis, and an image side surface S2 of the first lens L1 is concave near the optical axis.

The second lens L2 has a negative refractive power, an object side surface S3 of the second lens L2 is convex near the optical axis, and an image side surface S4 of the second lens L2 is concave near the optical axis.

The third lens L3 has a positive refractive power, an object side surface S5 of the third lens L3 is convex near the optical axis, and an image side surface S6 of the third lens L3 is concave near the optical axis.

The fourth lens L4 has a negative refractive power, and an object side surface S7 of the fourth lens L4 is convex near the optical axis, and an image side surface S8 of the fourth lens L4 is convex near the optical axis.

The fifth lens L5 has a positive refractive power, an object side surface S9 of the fifth lens L5 is convex near the optical axis, and an image side surface S10 of the fifth lens L5 is concave near the optical axis.

The sixth lens L6 has a negative refractive power, an object side surface S11 of the sixth lens L6 is convex near the optical axis, and an image side surface S12 of the sixth lens L5 is concave near the optical axis.

The seventh lens L7 has a positive refractive power, an object side surface S13 of the seventh lens L7 is convex near the optical axis, and an image side surface S14 of the seventh lens L7 is concave near the optical axis.

The eighth lens L8 has a negative refractive power, an object side surface S15 of the eighth lens L8 is convex near the optical axis, and an image side surface S16 of the eighth lens L8 is concave near the optical axis.

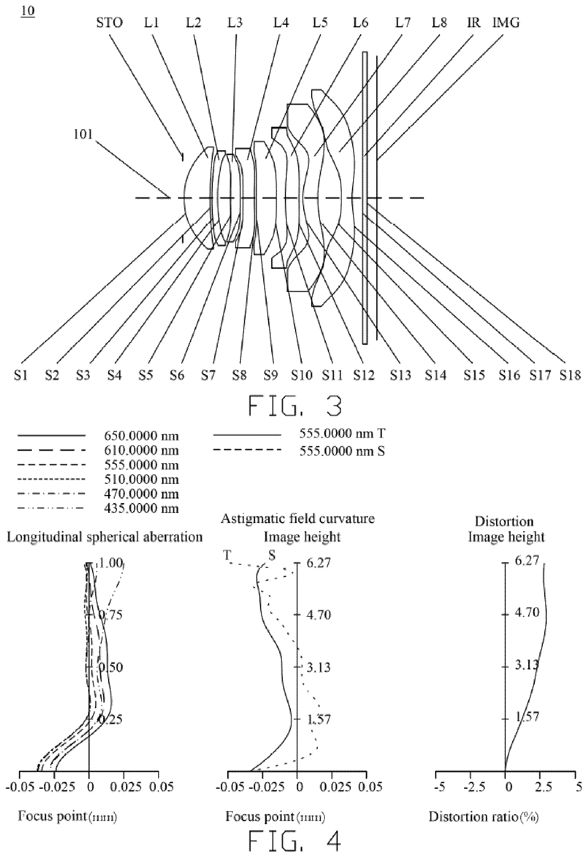

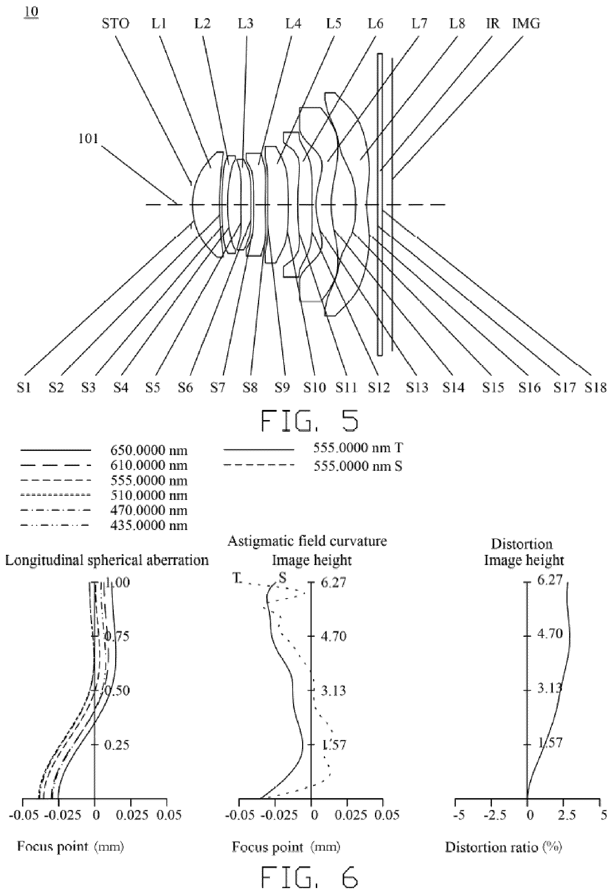

In addition, the optical system also includes an aperture stop STO, an optical filter IR, and an imaging surface IMG, and the aperture STO is an adjustable aperture. In this embodiment, the aperture stop STO is arranged on the object side surface of the first lens L1 and is configured to control the amount of incident light. FIG. 1, FIG. 3 and FIG. 5 respectively show schematic diagrams of the optical system 10 in three different states of the aperture STO. When the aperture STO is in three different states, the optical system 10 can have different aperture numbers. Based on this, for the convenience of describing the three states of the aperture STO, the aperture STO in the state shown in FIG. 1 is referred to as the aperture STO of the optical system 10 in the first aperture state, the aperture STO in the state shown in FIG. 3 is referred to as the aperture STO of the optical system 10 in the second aperture state, and the aperture STO in the state shown in FIG. 5 is referred to as the aperture STO of the optical system 10 in the third aperture state. It can be understood that the aperture STO includes but is not limited to these three states. By adjusting a distance A from the aperture STO to the object side surface S1 of the first lens L1 and an opening size of the aperture STO, the aperture STO can also have other different states so that the optical system 10 can obtain aperture numbers of different sizes.

The optical filter IR is arranged between the eighth lens L8 and the imaging surface IMG and includes an object side surface S17 and an image side surface S18. The optical filter IR is an infrared cut-off filter, which is used to filter out infrared light, so that the light entering the imaging surface IMG is visible light, and a wavelength of the visible light is in a range of 380 nm to 780 nm. The infrared cut-off filter may be made of glass or plastic, which can be coated thereon. The first lens L1 to the eighth lens L8 may be made of glass or plastic. An effective pixel area of the photosensitive chip is located on the imaging surface, and the photosensitive chip is set at the imaging surface IMG. The photosensitive chip captures different wavelength information of an object for subsequent processing.

Table 1a shows parameters of the optical system 10 of the embodiment. A direction from the object side to the image side is a positive direction. The Y radius in Table 1a is the curvature radius of the surface with the corresponding surface number at the optical axis. For a same lens, the surface with a smaller surface numeral is the object side surface of the lens, and the surface with a larger surface is the image side surface of the lens. In a "thickness" column, value is a distance from the current surface to the next surface along the optical axis. The focal length, material refractive index and Abbe number are obtained using visible light with a reference wavelength of 555.0 nm, and the units of the Y radius, thickness, and focal length are millimeters mm.

Table 1a

| First embodiment | | | | | | | | |
|---|---|---|---|---|---|---|---|---|
| EFL=7.16mm, FNO=1.4~2.0~4.0, FOV=80.6°, TTL=9.16mm | | | | | | | | |
| Surface numeral | Surface name | Surface type | Y radius mm | Thickness mm | Material | refractive index | Abbe number | Focal length |
| | object side | sphere | infinity | infinity | | | | |
| STO | aperture stop | sphere | infinity | A | | | | |
| S1 | L1 | asphere | 3.275 | 1.229 | plastic | 1.537 | 55.770 | 7.538 |
| S2 | | asphere | 14.955 | 0.100 | | | | |
| S3 | L2 | asphere | 11.395 | 0.260 | plastic | 1.694 | 18.400 | -25.240 |
| S4 | | asphere | 6.839 | 0.613 | | | | |
| S5 | L3 | asphere | 26.020 | 0.465 | plastic | 1.546 | 55.930 | 41.258 |
| S6 | | asphere | -166.907 | 0.131 | | | | |
| S7 | L4 | asphere | -336.206 | 0.537 | plastic | 1.694 | 18.400 | -20.798 |
| S8 | | asphere | 15.089 | 0.100 | | | | |
| S9 | L5 | asphere | 22.447 | 0.955 | plastic | 1.546 | 55.930 | 28.871 |
| S10 | | asphere | -52.173 | 0.432 | | | | |
| S11 | L6 | asphere | 18.370 | 0.651 | plastic | 1.569 | 37.710 | -144.418 |
| S12 | | asphere | 14.820 | 0.181 | | | | |
| S13 | L7 | asphere | 2.610 | 0.711 | plastic | 1.546 | 55.930 | 8.884 |
| S14 | | asphere | 5.103 | 1.120 | | | | |

(continued)

| First embodiment | | | | | | | | |
|---|---|---|---|---|---|---|---|---|
| EFL=7.16mm, FNO=1.4~2.0~4.0, FOV=80.6°, TTL=9.16mm | | | | | | | | |
| Surface numeral | Surface name | Surface type | Y radius mm | Thickness mm | Material | refractive index | Abbe number | Focal length |
| S15 | L8 | asphere | -25.091 | 0.503 | plastic | 1.537 | 55.770 | -5.632 |
| S16 | | asphere | 3.460 | 0.500 | | | | |
| S17 | IR | sphere | infinity | 0.210 | glass | 1.518 | 64.170 | |
| S18 | | sphere | infinity | 0.433 | | | | |
| IMG | imaging surface | sphere | infinity | 0.034 | | | | |
| Reference wavelength is 555.0 nm | | | | | | | | |

Table 1b

| Adjustable aperture | First aperture state | Second aperture state | Third aperture state |
|---|---|---|---|
| FNO | 1.40 | 2.00 | 4.00 |
| A | -0.38mm | 0.38mm | 0.38mm |

Wherein, f is the focal length of the optical system 10, FNO is the aperture number of the optical system 10, FOV° is the maximum field of view of the optical system 10. TTL is the distance from the object side surface of the first lens to the imaging surface along the optical axis, that is the total optical length. A is the distance from the aperture STO to the object side surface S1 of the first lens L1 in a direction parallel to the optical axis.

In this embodiment, object side surfaces and the image side surfaces of the first lens L1 to the eighth lens L8 are all aspherical surfaces. The surface shape x of aspherical surface may be expressed by, but not limited to, the following aspherical formula:

$$x = \frac{ch^2}{1 + \sqrt{1 - (k+1)c^2h^2}} + \sum Aih^i$$

Wherein, x is a distance from a corresponding point of the aspherical surface to a plane tangent to the vertex, h is a distance from any point on the aspherical surface to the optical axis, c is a curvature of a vertex of the aspherical surface, k is cone constant, and Ai is a coefficient corresponding to the ith higher-order term in the above aspherical formula. Table 1c shows the coefficients of high-order terms A4, A6, A8, A10, A12, A14, A16, A18, A20, A22, A24, A26, A28, A30 of the aspheric mirrors S1, S2, S3, S4, S5, S6, S7, S8, S9, S10, S11, S12, S13, S14, S15, S16 that can be used in the first embodiment.

Table 1c

| Aspheric Coefficients | | | | | |
|---|---|---|---|---|---|
| Surface numeral | k | A4 | A6 | A8 | A10 |
| S1 | 0.00000E+00 | 3.01543E-03 | 1.87194E-01 | -1.10625E+00 | 4.70867E+00 |
| S2 | 0.00000E+00 | -2.18179E-02 | -7.60803E-01 | 5.12213E+00 | -1.86680E+01 |
| S3 | 0.00000E+00 | -1.59150E-01 | 2.00689E-01 | -6.89163E+00 | 8.18569E+01 |
| S4 | 0.00000E+00 | -6.54973E-02 | -1.12430E-02 | -7.63692E-01 | 4.36431E+00 |
| S5 | 0.00000E+00 | -1.15624E-01 | 2.28733E-01 | -4.76006E+00 | 1.83174E+01 |
| S6 | 0.00000E+00 | 1.85486E-01 | -2.92010E+00 | 1.99492E+01 | -1.12262E+02 |

(continued)

| Aspheric Coefficients | | | | |
|---|---|---|---|---|
| Surface numeral | k | A4 | A6 | A8 | A10 |
| S7 | 0.00000E+00 | -1.09177E-02 | -8.49027E-01 | -1.02726E+00 | 4.78014E+01 |
| S8 | 0.00000E+00 | -3.91235E-01 | -2.24090E+00 | 3.51726E+01 | -2.79961E+02 |
| S9 | 0.00000E+00 | -5.51317E-01 | -4.83736E+00 | 8.87327E+01 | -7.65713E+02 |
| S10 | 0.00000E+00 | -2.67453E-01 | -8.01425E+00 | 8.75350E+01 | -6.53908E+02 |
| S11 | 0.00000E+00 | 1.27827E+00 | -1.56651E+01 | 1.15207E+02 | -6.29979E+02 |
| S12 | 0.00000E+00 | -3.99625E+00 | 8.36518E+00 | 6.03921E+01 | -8.14599E+02 |
| S13 | -1.24118E+00 | -8.20872E+00 | 5.14577E+01 | -5.02592E+02 | 4.05844E+03 |
| S14 | 0.00000E+00 | -2.01066E+00 | -6.00509E+00 | -2.74309E+02 | 4.78396E+03 |
| S15 | 0.00000E+00 | -4.24061E+01 | 3.92252E+02 | -2.71568E+03 | 1.33176E+04 |
| S16 | -2.14791E+01 | -2.15767E+01 | 1.72106E+02 | -9.96126E+02 | 3.96922E+03 |
| Surface numeral | A12 | A14 | A16 | A18 | A20 |
| S1 | -1.26974E+01 | 2.18798E+01 | -2.31860E+01 | 1.37289E+01 | -3.50264E+00 |
| S2 | 4.41893E+01 | -6.83084E+01 | 6.58331E+01 | -3.54583E+01 | 8.05321E+00 |
| S3 | -5.25234E+02 | 2.21084E+03 | -6.49945E+03 | 1.36834E+04 | -2.07627E+04 |
| S4 | 1.43272E+01 | -2.40968E+02 | 1.22370E+03 | -3.61665E+03 | 7.00292E+03 |
| S5 | -1.97394E-03 | -3.18569E+02 | 1.60202E+03 | -4.41609E+03 | 7.92300E+03 |
| S6 | 3.88707E+02 | -7.36319E+02 | 2.82591E+02 | 2.30168E+03 | -6.72310E+03 |
| S7 | -4.30210E+02 | 2.14442E+03 | -6.88430E+03 | 1.51309E+04 | -2.33451E+04 |
| S8 | 1.42098E+03 | -5.13524E+03 | 1.38539E+04 | -2.81503E+04 | 4.25478E+04 |
| S9 | 4.27563E+03 | -1.70610E+04 | 5.04646E+04 | -1.11140E+05 | 1.79961E+05 |
| S10 | 3.56030E+03 | -1.43106E+04 | 4.25362E+04 | -9.32818E+04 | 1.49930E+05 |
| S11 | 2.52308E+03 | -7.34423E+03 | 1.48466E+04 | -1.87486E+04 | 9.36762E+03 |
| S12 | 5.55981E+03 | -2.69675E+04 | 9.35604E+04 | -2.28751E+05 | 3.91218E+05 |
| S13 | -2.37920E+04 | 9.89432E+04 | -2.95185E+05 | 6.34813E+05 | -9.79473E+05 |
| S14 | -3.99415E+04 | 2.03236E+05 | -6.79980E+05 | 1.55557E+06 | -2.48057E+06 |
| S15 | -3.96893E+04 | 6.17033E+04 | -9.95412E+03 | -1.59311E+05 | 3.50257E+05 |
| S16 | -1.07788E+04 | 2.01205E+04 | -2.59951E+04 | 2.31056E+04 | -1.37823E+04 |
| Surface numeral | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 2.25193E+04 | -1.70208E+04 | 8.50943E+03 | -2.52686E+03 | 3.37121E+02 |
| S4 | -9.18290E+03 | 8.11246E+03 | -4.63581E+03 | 1.54983E+03 | -2.30392E+02 |
| S5 | -9.65062E+03 | 7.95433E+03 | -4.26074E+03 | 1.34130E+03 | -1.88555E+02 |
| S6 | 9.85306E+03 | -8.84188E+03 | 4.91053E+03 | -1.55645E+03 | 2.15914E+02 |
| S7 | 2.53375E+04 | -1.89781E+04 | 9.34938E+03 | -2.72807E+03 | 3.57380E+02 |
| S8 | -4.67304E+04 | 3.60325E+04 | -1.84343E+04 | 5.61000E+03 | -7.67987E+02 |
| S9 | -2.09534E+05 | 1.69681E+05 | -9.04119E+04 | 2.84492E+04 | -4.00224E+03 |
| S10 | -1.74098E+05 | 1.42014E+05 | -7.71588E+04 | 2.50637E+04 | -3.68109E+03 |

(continued)

| Surface numeral | A22 | A24 | A26 | A28 | A30 |
|---|---|---|---|---|---|
| S11 | 1.19134E+04 | -2.71931E+04 | 2.35647E+04 | -1.02378E+04 | 1.83657E+03 |
| S12 | -4.63558E+05 | 3.72301E+05 | -1.93305E+05 | 5.85526E+04 | -7.86125E+03 |
| S13 | 1.06951E+06 | -8.04463E+05 | 3.95874E+05 | -1.14624E+05 | 1.47990E+04 |
| S14 | 2.76322E+06 | -2.11332E+06 | 1.05982E+06 | -3.14432E+05 | 4.18970E+04 |
| S15 | -3.97195E+05 | 2.74742E+05 | -1.16416E+05 | 2.77493E+04 | -2.83866E+03 |
| S16 | 5.22689E+03 | -1.12589E+03 | 1.03031E+02 | 0.00000E+00 | 0.00000E+00 |

FIG. 2 (the first aperture state), FIG. 4 (the second aperture state) and FIG. 6 (the third aperture state) each shows a longitudinal spherical aberration curve diagram, an astigmatism curve diagram and a distortion curve diagram of the optical system 10 in the respective aperture states in the first embodiment.

In the longitudinal spherical aberration curve diagram, the horizontal coordinate represents deviation in mm of the focus point, which is a distance from the imaging surface to an intersection of the light ray and the optical axis. The vertical coordinate represents the normalized field of view. It can be seen that deviation degree of converged focal points of light of different wavelengths in the first embodiment is low, and the diffuse spot or chromatic halo is effectively prevented, which indicates that the imaging quality of the optical system 10 in this embodiment is good.

In the astigmatism curve diagram, the horizontal coordinate represents deviation in mm of the focus point, which is the distance from the imaging surface to the intersection of the light ray and the optical axis. The vertical coordinate represents the image height in mm. It can be seen that deviation degree of converged focal points of the sagittal S and meridional T in the first embodiment deviating from the image plane is low, the difference between the two is small, and the astigmatism and field curvature is effectively prevented, which indicates that the imaging quality of the optical system 10 in this embodiment is good.

In the distortion curve diagram, the horizontal coordinate represents the distortion value, with the symbol of %. The vertical coordinate represents the image height in mm. The distortion curve represents the value of the distortion corresponding to different angles of field of view. It can be seen that the distortion degree of the reference wavelength light in the first embodiment is low, and the imaging deformation is effectively suppressed, which indicates that the imaging quality of the optical system 10 in this embodiment is good.

Second embodiment

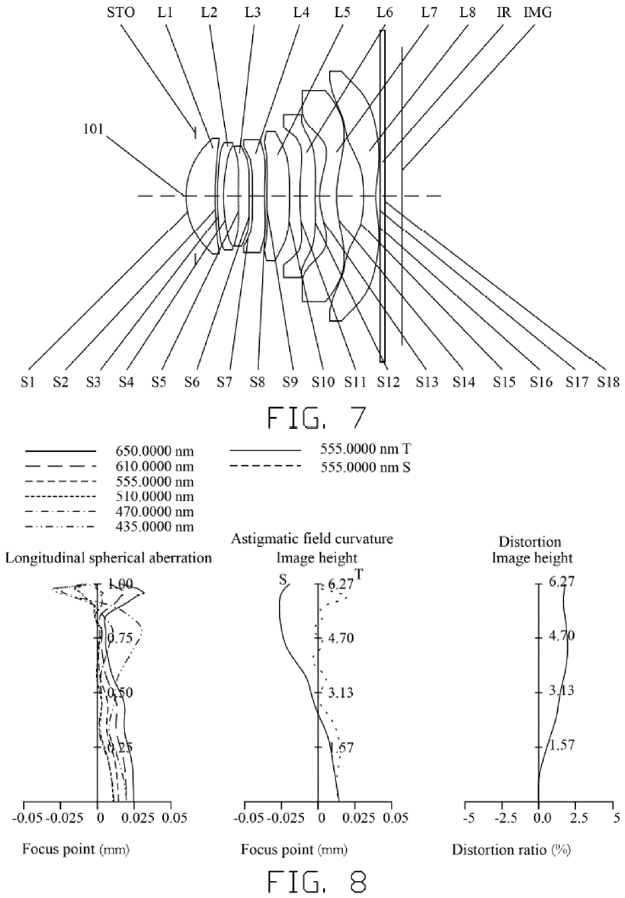

Referring to FIG. 7, the overall structure of the optical system 10 of this embodiment is substantially the same as that of the first embodiment, and the same contents can be referred to in the first embodiment, so it will not be repeated. The remaining differences are detailed in the table.

Table 2a

| Second embodiment | | | | | | | | |
|---|---|---|---|---|---|---|---|---|
| EFL=7.12, FNO=1.4~2.0~4.0, FOV=81.8, TTL=9.03 | | | | | | | | |
| Surface numeral | Surface name | Surface type | Y radius mm | Thickness mm | Material | refractive index | Abbe number | Focal length |
| | object side | sphere | infinity | infinity | | | | |
| STO | aperture stop | sphere | infinity | A | | | | |
| S1 | L1 | asphere | 3.268 | 1.212 | plastic | 1.537 | 55.770 | 7.536 |
| S2 | | asphere | 14.843 | 0.100 | | | | |
| S3 | L2 | asphere | 11.208 | 0.255 | plastic | 1.694 | 18.400 | -25.489 |
| S4 | | asphere | 6.797 | 0.615 | | | | |
| S5 | L3 | asphere | 25.305 | 0.458 | plastic | 1.546 | 55.930 | 41.436 |
| S6 | | asphere | -212.436 | 0.128 | | | | |

(continued)

| Second embodiment | | | | | | | | |
|---|---|---|---|---|---|---|---|---|
| EFL=7.12, FNO=1.4~2.0~4.0, FOV=81.8, TTL=9.03 | | | | | | | | |
| Surface numeral | Surface name | Surface type | Y radius mm | Thickness mm | Material | refractive index | Abbe number | Focal length |
| S7 | L4 | asphere | 6718.112 | 0.512 | plastic | 1.694 | 18.400 | -20.553 |
| S8 | | asphere | 14.231 | 0.100 | | | | |
| S9 | L5 | asphere | 20.411 | 0.946 | plastic | 1.546 | 55.930 | 27.676 |
| S10 | | asphere | -57.267 | 0.435 | | | | |
| S11 | L6 | asphere | 17.953 | 0.633 | plastic | 1.569 | 37.710 | -146.079 |
| S12 | | asphere | 14.575 | 0.187 | | | | |
| S13 | L7 | asphere | 2.595 | 0.711 | plastic | 1.546 | 55.930 | 8.786 |
| S14 | | asphere | 5.105 | 1.126 | | | | |
| S15 | L8 | asphere | -25.154 | 0.510 | plastic | 1.537 | 55.770 | -5.301 |
| S16 | | asphere | 3.229 | 0.180 | | | | |
| S17 | IR | sphere | infinity | 0.210 | glass | 1.518 | 64.170 | |
| S18 | | sphere | infinity | 0.678 | | | | |
| IMG | imaging surface | sphere | infinity | 0.034 | | | | |
| Reference wavelength is 555.0 nm | | | | | | | | |

Table 2b

| Adjustable aperture | First aperture state | Second aperture state | Third aperture state |
|---|---|---|---|
| FNO | 1.40 | 2.00 | 4.00 |
| A | -0.38mm | 0.38mm | 0.38mm |

Table 2c shows the coefficients of high-order terms that can be used for each aspherical mirror surface in the second embodiment, wherein each aspherical surface shape can be defined by the formula provided in the first embodiment.

Table 2c

| Surface numeral | k | A4 | A6 | A8 | A10 |
|---|---|---|---|---|---|
| S1 | 2.19467E-03 | 1.64993E-02 | 2.38582E-02 | 1.56739E-02 | -3.53526E-02 |
| S2 | 2.00109E-01 | -5.13000E-02 | -4.05326E-01 | 3.29638E+00 | -1.34763E+01 |
| S3 | -1.57501E-01 | -1.29764E-01 | -8.41293E-01 | 9.80311E+00 | -7.04397E+01 |
| S4 | -1.08171E-02 | -7.06918E-02 | 7.66783E-02 | -3.23657E+00 | 3.77128E+01 |
| S5 | 9.81385E-01 | -9.81614E-02 | -1.07383E-01 | -2.06224E+00 | 3.68516E+00 |
| S6 | 9.90000E+01 | 1.75183E-01 | -2.91479E+00 | 2.21270E+01 | -1.43957E+02 |
| S7 | -9.90000E+01 | 7.91792E-05 | -1.06371E+00 | 8.53473E-01 | 3.37809E+01 |
| S8 | 6.82477E-01 | -4.92465E-01 | 8.04379E-01 | -7.92772E+00 | 8.24234E+01 |
| S9 | -8.73549E-01 | -6.53410E-01 | -2.33498E+00 | 5.11624E+01 | -4.33673E+02 |
| S10 | 3.56546E+01 | -2.10733E-01 | -9.12713E+00 | 9.06045E+01 | -5.96028E+02 |
| S11 | 2.94265E+00 | 1.62771E+00 | -2.43575E+01 | 2.32075E+02 | -1.62007E+03 |

(continued)

| Surface numeral | k | A4 | A6 | A8 | A10 |
|---|---|---|---|---|---|
| S12 | -1.84917E-01 | -4.27121E+00 | 7.37355E+00 | 1.14343E+02 | -1.47173E+03 |
| S13 | -1.24205E+00 | -8.29411E+00 | 4.98636E+01 | -4.68552E+02 | 3.72142E+03 |
| S14 | -3.46387E-05 | -2.15967E+00 | 1.82848E+00 | -3.93743E+02 | 5.81000E+03 |
| S15 | -3.53646E-01 | -4.55836E+01 | 4.31760E+02 | -3.03878E+03 | 1.50811E+04 |
| S16 | -1.88670E+01 | -2.27881E+01 | 1.66963E+02 | -6.44426E+02 | -6.16436E+02 |
| Surface numeral | A12 | A14 | A16 | A18 | A20 |
| S1 | -1.73133E-01 | 1.26432E+00 | -2.67222E+00 | 2.45544E+00 | -8.76447E-01 |
| S2 | 3.55055E+01 | -5.97596E+01 | 6.11195E+01 | -3.42094E+01 | 7.96278E+00 |
| S3 | 3.77266E+02 | -1.49494E+03 | 4.38617E+03 | -9.50911E+03 | 1.51089E+04 |
| S4 | -2.38107E+02 | 9.68643E+02 | -2.68685E+03 | 5.19803E+03 | -7.03012E+03 |
| S5 | 6.16667E+01 | -5.47645E+02 | 2.34995E+03 | -6.37772E+03 | 1.17497E+04 |
| S6 | 6.20025E+02 | -1.79348E+03 | 3.55218E+03 | -4.78491E+03 | 4.18488E+03 |
| S7 | -3.60161E+02 | 1.90705E+03 | -6.31963E+03 | 1.41664E+04 | -2.21495E+04 |
| S8 | -6.00443E+02 | 2.75424E+03 | -8.26987E+03 | 1.69434E+04 | -2.42879E+04 |
| S9 | 2.35249E+03 | -9.36234E+03 | 2.86786E+04 | -6.72317E+04 | 1.17038E+05 |
| S10 | 2.81634E+03 | -9.85429E+03 | 2.58807E+04 | -5.11935E+04 | 7.59183E+04 |
| S11 | 8.16692E+03 | -2.99011E+04 | 7.95812E+04 | -1.53657E+05 | 2.13597E+05 |
| S12 | 1.02085E+04 | -4.91093E+04 | 1.67813E+05 | -4.06539E+05 | 6.95097E+05 |
| S13 | -2.18323E+04 | 9.17382E+04 | -2.78194E+05 | 6.09994E+05 | -9.60543E+05 |
| S14 | -4.54365E+04 | 2.22634E+05 | -7.26587E+05 | 1.63277E+06 | -2.56795E+06 |
| S15 | -4.46222E+04 | 6.32089E+04 | 2.38054E+04 | -2.74180E+05 | 5.44518E+05 |
| S16 | 2.19169E+04 | -1.30073E+05 | 4.48840E+05 | -1.04290E+06 | 1.70464E+06 |
| Surface numeral | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | -1.73019E+04 | 1.38581E+04 | -7.35270E+03 | 2.31852E+03 | -3.28631E+02 |
| S4 | 6.53773E+03 | -4.00909E+03 | 1.48520E+03 | -2.71330E+02 | 1.14560E+01 |
| S5 | -1.49530E+04 | 1.29793E+04 | -7.34626E+03 | 2.44564E+03 | -3.63338E+02 |
| S6 | -2.03001E+03 | 1.23046E+02 | 4.51842E+02 | -2.40492E+02 | 4.11878E+01 |
| S7 | 2.42610E+04 | -1.82841E+04 | 9.04176E+03 | -2.64314E+03 | 3.46291E+02 |
| S8 | 2.45120E+04 | -1.71524E+04 | 7.95338E+03 | -2.20541E+03 | 2.77770E+02 |
| S9 | -1.46140E+05 | 1.25937E+05 | -7.07901E+04 | 2.33141E+04 | -3.41024E+03 |
| S10 | -8.32449E+04 | 6.56059E+04 | -3.51929E+04 | 1.15074E+04 | -1.72877E+03 |
| S11 | -2.10115E+05 | 1.41514E+05 | -6.14021E+04 | 1.52228E+04 | -1.59717E+03 |
| S12 | -8.30049E+05 | 6.76088E+05 | -3.57696E+05 | 1.10788E+05 | -1.52488E+04 |
| S13 | 1.07026E+06 | -8.21055E+05 | 4.11876E+05 | -1.21530E+05 | 1.59877E+04 |
| S14 | 2.82796E+06 | -2.14103E+06 | 1.06360E+06 | -3.12649E+05 | 4.12719E+04 |
| S15 | -5.91690E+05 | 3.89832E+05 | -1.51764E+05 | 3.05861E+04 | -2.12317E+03 |
| S16 | -1.97325E+06 | 1.58773E+06 | -8.45511E+05 | 2.67998E+05 | -3.82740E+04 |

FIG. 8 (the first aperture state) shows a longitudinal spherical aberration curve diagram, an astigmatism curve diagram and a distortion curve diagram of the optical system 10 in the second embodiment. From the figure, the longitudinal spherical aberration, astigmatism, and distortion of the optical system 10 are well controlled, such that the optical system 10 of this embodiment has good imaging quality. Considering that reducing the aperture can improve the image quality without triggering the diffraction limit, the imaging quality of the optical system 10 of the second embodiment in other aperture states is also excellent.

Third embodiment

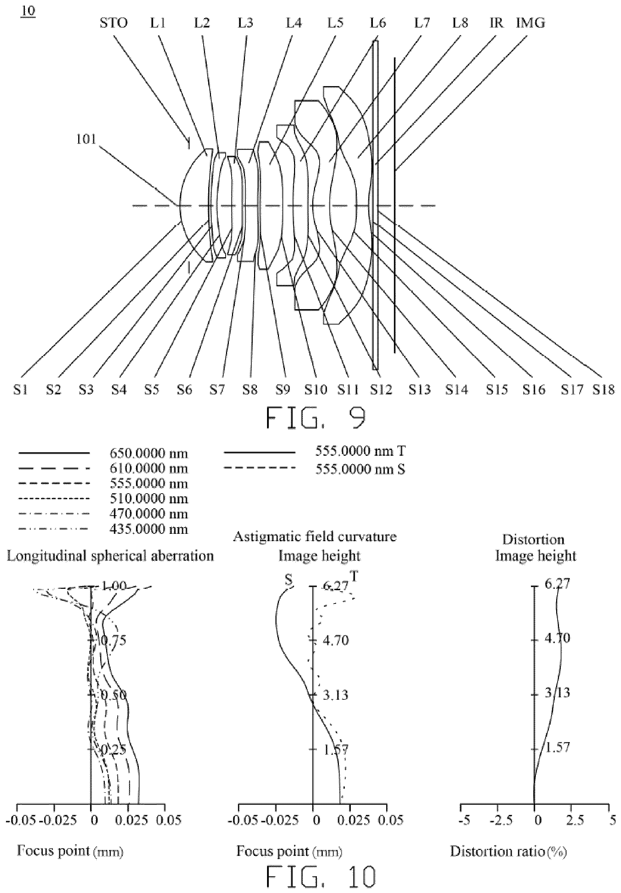

Referring to FIG. 9, the overall structure of the optical system 10 of this embodiment is substantially the same as that of the first embodiment, and the same contents can be referred to in the first embodiment, so it will not be repeated. The remaining differences are detailed in the table.

Table 3a

| Third embodiment | | | | | | | | |
|---|---|---|---|---|---|---|---|---|
| EFL=7.06, FNO=1.4~2.0~4.0, FOV=82.36, TTL=8.97 | | | | | | | | |
| Surface numeral | Surface name | Surface type | Y radius mm | Thickness mm | Material | refractive index | Abbe number | Focal length |
| | object side | sphere | infinity | infinity | | | | |
| STO | aperture stop | sphere | infinity | A | | | | |
| S1 | L1 | asphere | 3.268 | 1.191 | plastic | 1.537 | 55.770 | 7.542 |
| S2 | | asphere | 14.812 | 0.100 | | | | |
| S3 | L2 | asphere | 10.839 | 0.249 | plastic | 1.694 | 18.400 | -25.654 |
| S4 | | asphere | 6.674 | 0.619 | | | | |
| S5 | L3 | asphere | 25.459 | 0.444 | plastic | 1.546 | 55.930 | 60.972 |
| S6 | | asphere | 107.509 | 0.123 | | | | |
| S7 | L4 | asphere | 69.028 | 0.516 | plastic | 1.694 | 18.400 | -24.585 |
| S8 | | asphere | 13.637 | 0.102 | | | | |
| S9 | L5 | asphere | 19.502 | 0.946 | plastic | 1.546 | 55.930 | 26.571 |
| S10 | | asphere | -55.711 | 0.435 | | | | |
| S11 | L6 | asphere | 17.924 | 0.617 | plastic | 1.569 | 37.710 | -145.620 |
| S12 | | asphere | 14.551 | 0.188 | | | | |
| S13 | L7 | asphere | 2.594 | 0.711 | plastic | 1.546 | 55.930 | 8.786 |
| S14 | | asphere | 5.101 | 1.126 | | | | |
| S15 | L8 | asphere | -25.031 | 0.507 | plastic | 1.537 | 55.770 | -5.301 |
| S16 | | asphere | 3.231 | 0.176 | | | | |
| S17 | IR | sphere | infinity | 0.210 | glass | 1.518 | 64.170 | |
| S18 | | sphere | infinity | 0.674 | | | | |
| IMG | imaging surface | sphere | infinity | 0.034 | | | | |
| | | | | | | | | |
| Reference wavelength is 555.0 nm | | | | | | | | |

Table 3b

| Adjustable aperture | First aperture state | Second aperture state | Third aperture state |
|---|---|---|---|
| FNO | 1.40 | 2.00 | 4.00 |
| A | -0.38 | 0.38 | 0.38 |

Table 3c shows the coefficients of high-order terms that can be used for each aspherical mirror surface in the third embodiment, wherein each aspherical surface shape can be defined by the formula provided in the first embodiment.

Table 3c

| Surface numeral | k | A4 | A6 | A8 | A10 |
|---|---|---|---|---|---|
| S1 | 3.32447E-03 | 2.06199E-02 | -3.02183E-02 | 3.36220E-01 | -1.20134E+00 |
| S2 | -6.56456E-01 | -5.78744E-02 | -2.69303E-01 | 2.38155E+00 | -9.92267E+00 |
| S3 | -1.59927E-01 | -1.43836E-01 | -3.07582E-01 | 2.48123E+00 | -5.69791E+00 |
| S4 | 3.01504E-02 | -8.04281E-02 | 3.80191E-01 | -6.74868E+00 | 6.29126E+01 |
| S5 | 1.28056E+00 | -9.79992E-02 | 3.25426E-02 | -3.51998E+00 | 1.33547E+01 |
| S6 | -1.04619E+01 | 1.76281E-01 | -3.02416E+00 | 2.40244E+01 | -1.59273E+02 |
| S7 | -6.98273E+01 | -3.09196E-03 | -1.06473E+00 | 1.53116E+00 | 2.47434E+01 |
| S8 | 6.43048E-01 | -4.87436E-01 | 6.02774E-01 | -2.76667E+00 | 2.09128E+01 |
| S9 | -8.05531E-01 | -6.50635E-01 | -2.07203E+00 | 4.84158E+01 | -4.25295E+02 |
| S10 | 4.00252E+01 | -1.97577E-01 | -9.11805E+00 | 9.10711E+01 | -6.11095E+02 |
| S11 | 2.83354E+00 | 1.57430E+00 | -2.30858E+01 | 2.18144E+02 | -1.52422E+03 |
| S12 | -1.97230E-01 | -4.12887E+00 | 5.87602E+00 | 1.27816E+02 | -1.54459E+03 |
| S13 | -1.24178E+00 | -8.21222E+00 | 4.79476E+01 | -4.46555E+02 | 3.57251E+03 |
| S14 | -5.49471E-05 | -2.29373E+00 | 5.45517E+00 | -4.31556E+02 | 5.98861E+03 |
| S15 | -7.74789E-01 | -4.72962E+01 | 4.57020E+02 | -3.28069E+03 | 1.66720E+04 |
| S16 | -1.87571E+01 | -2.36567E+01 | 1.74789E+02 | -6.67945E+02 | -8.51203E+02 |
| Surface numeral | A12 | A14 | A16 | A18 | A20 |
| S1 | 2.48888E+00 | -2.65038E+00 | 9.68533E-01 | 4.87841E-01 | -3.97803E-01 |
| S2 | 2.65823E+01 | -4.52301E+01 | 4.64587E+01 | -2.59675E+01 | 6.00869E+00 |
| S3 | -1.78056E+01 | 2.03875E+02 | -8.30714E+02 | 2.01572E+03 | -3.20156E+03 |
| S4 | -3.59014E+02 | 1.37028E+03 | -3.63189E+03 | 6.79669E+03 | -8.99275E+03 |
| S5 | 1.79362E+01 | -4.00585E+02 | 1.96548E+03 | -5.58407E+03 | 1.04670E+04 |
| S6 | 7.01222E+02 | -2.09213E+03 | 4.33010E+03 | -6.23468E+03 | 6.11673E+03 |
| S7 | -2.94247E+02 | 1.59359E+03 | -5.29073E+03 | 1.17763E+04 | -1.81879E+04 |
| S8 | -1.68629E+02 | 7.82871E+02 | -2.10949E+03 | 3.40017E+03 | -3.10652E+03 |
| S9 | 2.39947E+03 | -9.86929E+03 | 3.07198E+04 | -7.18904E+04 | 1.23500E+05 |
| S10 | 2.96475E+03 | -1.06480E+04 | 2.85721E+04 | -5.73491E+04 | 8.56361E+04 |
| S11 | 7.70521E+03 | -2.82696E+04 | 7.52944E+04 | -1.45302E+05 | 2.01657E+05 |
| S12 | 1.03386E+04 | -4.81947E+04 | 1.60412E+05 | -3.80413E+05 | 6.39139E+05 |
| S13 | -2.11863E+04 | 8.98461E+04 | -2.74335E+05 | 6.04435E+05 | -9.54880E+05 |
| S14 | -4.55724E+04 | 2.19709E+05 | -7.08903E+05 | 1.57837E+06 | -2.46191E+06 |
| S15 | -5.12394E+04 | 8.05128E+04 | -5.48924E+03 | -2.39281E+05 | 5.07338E+05 |

(continued)

| Surface numeral | A12 | A14 | A16 | A18 | A20 |
|---|---|---|---|---|---|
| S16 | 2.52065E+04 | -1.50172E+05 | 5.25559E+05 | -1.24256E+06 | 2.06959E+06 |
| Surface numeral | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 3.40218E+03 | -2.38301E+03 | 1.04318E+03 | -2.52926E+02 | 2.47651E+01 |
| S4 | 8.29470E+03 | -5.15258E+03 | 2.01274E+03 | -4.29241E+02 | 3.46329E+01 |
| S5 | -1.33779E+04 | 1.15787E+04 | -6.50561E+03 | 2.14359E+03 | -3.14547E+02 |
| S6 | -3.84578E+03 | 1.28950E+03 | -2.98633E+01 | -1.27480E+02 | 3.01614E+01 |
| S7 | 1.96055E+04 | -1.44955E+04 | 7.01173E+03 | -1.99898E+03 | 2.54597E+02 |
| S8 | 1.03536E+03 | 8.91626E+02 | -1.20144E+03 | 5.54130E+02 | -9.67179E+01 |
| S9 | -1.51399E+05 | 1.27919E+05 | -7.05238E+04 | 2.28025E+04 | -3.27812E+03 |
| S10 | -9.38162E+04 | 7.33301E+04 | -3.87666E+04 | 1.24315E+04 | -1.82579E+03 |
| S11 | -1.97854E+05 | 1.32768E+05 | -5.73155E+04 | 1.41060E+04 | -1.46305E+03 |
| S12 | -7.51994E+05 | 6.04623E+05 | -3.16190E+05 | 9.68990E+04 | -1.32071E+04 |
| S13 | 1.06621E+06 | -8.19043E+05 | 4.11178E+05 | -1.21361E+05 | 1.59639E+04 |
| S14 | 2.68991E+06 | -2.02084E+06 | 9.96232E+05 | -2.90626E+05 | 3.80775E+04 |
| S15 | -5.46765E+05 | 3.39982E+05 | -1.14380E+05 | 1.48260E+04 | 6.93117E+02 |
| S16 | -2.44295E+06 | 2.00508E+06 | -1.08934E+06 | 3.52283E+05 | -5.13337E+04 |

FIG. 10 (the first aperture state) shows a longitudinal spherical aberration curve diagram, an astigmatism curve diagram and a distortion curve diagram of the optical system 10 in the third embodiment. From the figure, the longitudinal spherical aberration, astigmatism, and distortion of the optical system 10 are well controlled, such that the optical system 10 of this embodiment has good imaging quality. Considering that reducing the aperture can improve the image quality without triggering the diffraction limit, the imaging quality of the optical system 10 of the third embodiment in other aperture states is also excellent.

Fourth embodiment

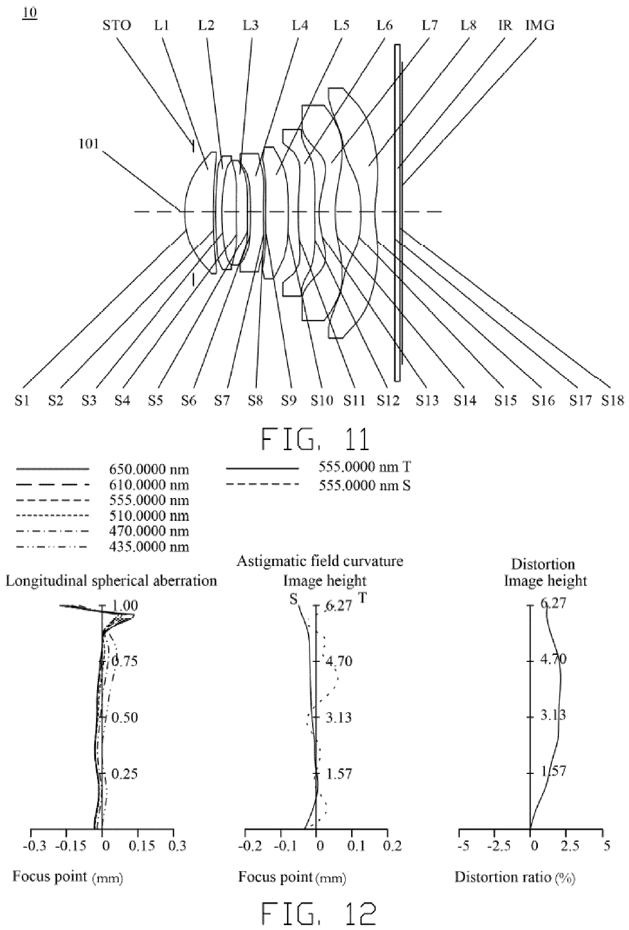

Referring to FIG. 11, the overall structure of the optical system 10 of this embodiment is substantially the same as that of the first embodiment, and the same contents can be referred to in the first embodiment, so it will not be repeated. The remaining differences are detailed in the table.

Table 4a

| Fourth embodiment | | | | | | | | |
|---|---|---|---|---|---|---|---|---|
| EFL=7.40, FNO=1.4~2.0~4.0, FOV=79.66, TTL=9.47 | | | | | | | | |
| Surface numeral | Surface name | Surface type | Y radius mm | Thickness mm | Material | refractive index | Abbe number | Focal length |
| | object side | sphere | infinity | infinity | | | | |
| STO | aperture stop | sphere | infinity | A | | | | |
| S1 | L1 | asphere | 3.304 | 1.244 | plastic | 1.537 | 55.770 | 7.400 |
| S2 | | asphere | 17.105 | 0.103 | | | | |
| S3 | L2 | asphere | 13.973 | 0.262 | plastic | 1.694 | 18.400 | -21.981 |
| S4 | | asphere | 7.236 | 0.637 | | | | |

(continued)

| Surface numeral | Surface name | Surface type | Y radius mm | Thickness mm | Material | refractive index | Abbe number | Focal length |
|---|---|---|---|---|---|---|---|---|
| | | | Fourth embodiment | | | | | |
| | | | EFL=7.40, FNO=1.4~2.0~4.0, FOV=79.66, TTL=9.47 | | | | | |
| S5 | L3 | asphere | 23.557 | 0.486 | plastic | 1.546 | 55.930 | 32.376 |
| S6 | | asphere | -70.349 | 0.123 | | | | |
| S7 | L4 | asphere | -46.754 | 0.567 | plastic | 1.694 | 18.400 | -17.096 |
| S8 | | asphere | 15.976 | 0.100 | | | | |
| S9 | L5 | asphere | 26.110 | 0.989 | plastic | 1.546 | 55.930 | 28.080 |
| S10 | | asphere | -36.656 | 0.431 | | | | |
| S11 | L6 | asphere | 17.443 | 0.727 | plastic | 1.569 | 37.710 | -299.899 |
| S12 | | asphere | 15.586 | 0.189 | | | | |
| S13 | L7 | asphere | 2.633 | 0.707 | plastic | 1.546 | 55.930 | 9.040 |
| S14 | | asphere | 5.109 | 1.111 | | | | |
| S15 | L8 | asphere | -25.244 | 0.610 | plastic | 1.537 | 55.770 | -5.423 |
| S16 | | asphere | 3.316 | 0.877 | | | | |
| S17 | IR | sphere | infinity | 0.210 | glass | 1.518 | 64.170 | |
| S18 | | sphere | infinity | 0.066 | | | | |
| IMG | imaging surface | sphere | infinity | 0.034 | | | | |
| | | | Reference wavelength is 555.0 nm | | | | | |

Table 4b

| Adjustable aperture | First aperture state | Second aperture state | Third aperture state |
|---|---|---|---|
| FNO | 1.40 | 2.00 | 4.00 |
| A | -0.38 | 0.38 | 0.38 |

Table 4c shows the coefficients of high-order terms that can be used for each aspherical mirror surface in the fourth embodiment, wherein each aspherical surface shape can be defined by the formula provided in the first embodiment.

Table 4c

| Surface numeral | k | A4 | A6 | A8 | A10 |
|---|---|---|---|---|---|
| S1 | 3.57250E-03 | -2.93431E-02 | 5.45080E-01 | -2.47501E+00 | 6.28963E+00 |
| S2 | -1.52601E+00 | -4.53878E-02 | -7.39008E-01 | 5.33646E+00 | -2.00574E+01 |
| S3 | 5.70526E-01 | -1.76625E-01 | 4.47980E-01 | -1.54000E+01 | 1.90920E+02 |
| S4 | -9.63562E-02 | -7.92546E-02 | -3.36124E-01 | 6.65111E+00 | -7.85375E+01 |
| S5 | -2.09227E+00 | -1.01947E-01 | -9.33749E-01 | 1.81106E+01 | -2.53323E+02 |
| S6 | -9.90000E+01 | 1.99067E-01 | -3.40039E+00 | 2.51726E+01 | -1.57831E+02 |
| S7 | 2.45102E+01 | 1.44795E-03 | -1.11509E+00 | -9.97683E-01 | 6.29445E+01 |
| S8 | -2.14447E+00 | -4.28420E-01 | -3.75298E+00 | 6.60079E+01 | -5.97515E+02 |
| S9 | 3.59604E+00 | -5.45941E-01 | -7.24987E+00 | 1.31832E+02 | -1.18184E+03 |

(continued)

| Surface numeral | k | A4 | A6 | A8 | A10 |
|---|---|---|---|---|---|
| S10 | 2.85318E+01 | -4.48280E-01 | -3.23063E+00 | 1.33682E+01 | 7.04332E+01 |
| S11 | 4.31556E+00 | 1.16882E+00 | -1.33701E+01 | 9.77690E+01 | -6.36080E+02 |
| S12 | -3.38902E-01 | -4.22320E+00 | 7.39675E+00 | 9.41941E+01 | -1.15665E+03 |
| S13 | -1.24139E+00 | -8.73732E+00 | 5.75244E+01 | -5.88003E+02 | 4.92462E+03 |
| S14 | 7.37897E-04 | -8.10587E-01 | -4.56718E+01 | 3.00183E+02 | -4.55548E+01 |
| S15 | -5.79975E-01 | -4.14302E+01 | 3.83563E+02 | -2.68910E+03 | 1.35755E+04 |
| S16 | -2.00872E+01 | -2.15029E+01 | 1.58789E+02 | -6.91942E+02 | 5.54849E+02 |
| Surface numeral | A12 | A14 | A16 | A18 | A20 |
| S1 | -8.04608E+00 | 3.43259E+00 | 2.80747E+00 | -3.32865E+00 | 7.92623E-01 |
| S2 | 4.96858E+01 | -8.24860E+01 | 8.73107E+01 | -5.22056E+01 | 1.31557E+01 |
| S3 | -1.31355E+03 | 5.92362E+03 | -1.85878E+04 | 4.16365E+04 | -6.70679E+04 |
| S4 | 5.88151E+02 | -2.91251E+03 | 9.96825E+03 | -2.41870E+04 | 4.19973E+04 |
| S5 | 1.97654E+03 | -9.78557E+03 | 3.28557E+04 | -7.73776E+04 | 1.29543E+05 |
| S6 | 6.30497E+02 | -1.54524E+03 | 2.01232E+03 | 7.55880E+01 | -5.51476E+03 |
| S7 | -6.01056E+02 | 3.15767E+03 | -1.06671E+04 | 2.46396E+04 | -3.99010E+04 |
| S8 | 3.43334E+03 | -1.37185E+04 | 3.96455E+04 | -8.39081E+04 | 1.29620E+05 |
| S9 | 6.81329E+03 | -2.76850E+04 | 8.25111E+04 | -1.82396E+05 | 2.96923E+05 |
| S10 | -1.18863E+03 | 7.23501E+03 | -2.65213E+04 | 6.50183E+04 | -1.10271E+05 |
| S11 | 3.56811E+03 | -1.59753E+04 | 5.31989E+04 | -1.27873E+05 | 2.19204E+05 |
| S12 | 7.73924E+03 | -3.71402E+04 | 1.28998E+05 | -3.19124E+05 | 5.56266E+05 |
| S13 | -2.97951E+04 | 1.27648E+05 | -3.92030E+05 | 8.67812E+05 | -1.37875E+06 |
| S14 | -1.36588E+04 | 1.05155E+05 | -4.20633E+05 | 1.06150E+06 | -1.79994E+06 |
| S15 | -4.36409E+04 | 8.59933E+04 | -9.76787E+04 | 4.71994E+04 | 1.92110E+04 |
| S16 | 1.21573E+04 | -8.12022E+04 | 2.83407E+05 | -6.46963E+05 | 1.02482E+06 |
| Surface numeral | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 7.71103E+04 | -6.17350E+04 | 3.26850E+04 | -1.02807E+04 | 1.45368E+03 |
| S4 | -5.18916E+04 | 4.45768E+04 | -2.53117E+04 | 8.54187E+03 | -1.29715E+03 |
| S5 | -1.53656E+05 | 1.26338E+05 | -6.85262E+04 | 2.20626E+04 | -3.19428E+03 |
| S6 | 1.08617E+04 | -1.12937E+04 | 6.93268E+03 | -2.37472E+03 | 3.51093E+02 |
| S7 | 4.53919E+04 | -3.55855E+04 | 1.83212E+04 | -5.57802E+03 | 7.61122E+02 |
| S8 | -1.43944E+05 | 1.11585E+05 | -5.72104E+04 | 1.74112E+04 | -2.37949E+03 |
| S9 | -3.48980E+05 | 2.86488E+05 | -1.55279E+05 | 4.98185E+04 | -7.15570E+03 |
| S10 | 1.29821E+05 | -1.03983E+05 | 5.39008E+04 | -1.62384E+04 | 2.14695E+03 |
| S11 | -2.64557E+05 | 2.19178E+05 | -1.18496E+05 | 3.76180E+04 | -5.31650E+03 |
| S12 | -6.74821E+05 | 5.56373E+05 | -2.97022E+05 | 9.25889E+04 | -1.27996E+04 |
| S13 | 1.55118E+06 | -1.20305E+06 | 6.10903E+05 | -1.82672E+05 | 2.43759E+04 |
| S14 | 2.09139E+06 | -1.65021E+06 | 8.48213E+05 | -2.56872E+05 | 3.48453E+04 |

(continued)

| Surface numeral | A22 | A24 | A26 | A28 | A30 |
|---|---|---|---|---|---|
| S15 | -3.09209E+04 | -1.75752E+03 | 2.00259E+04 | -1.20290E+04 | 2.36784E+03 |
| S16 | -1.14038E+06 | 8.77468E+05 | -4.45362E+05 | 1.34274E+05 | -1.82217E+04 |

FIG. 12 (the first aperture state) shows a longitudinal spherical aberration curve diagram, an astigmatism curve diagram and a distortion curve diagram of the optical system 10 in the fourth embodiment. From the figure, the longitudinal spherical aberration, astigmatism, and distortion of the optical system 10 are well controlled, such that the optical system 10 of this embodiment has good imaging quality. Considering that reducing the aperture can improve the image quality without triggering the diffraction limit, the imaging quality of the optical system 10 of the fourth embodiment in other aperture states is also excellent.

Fifth embodiment

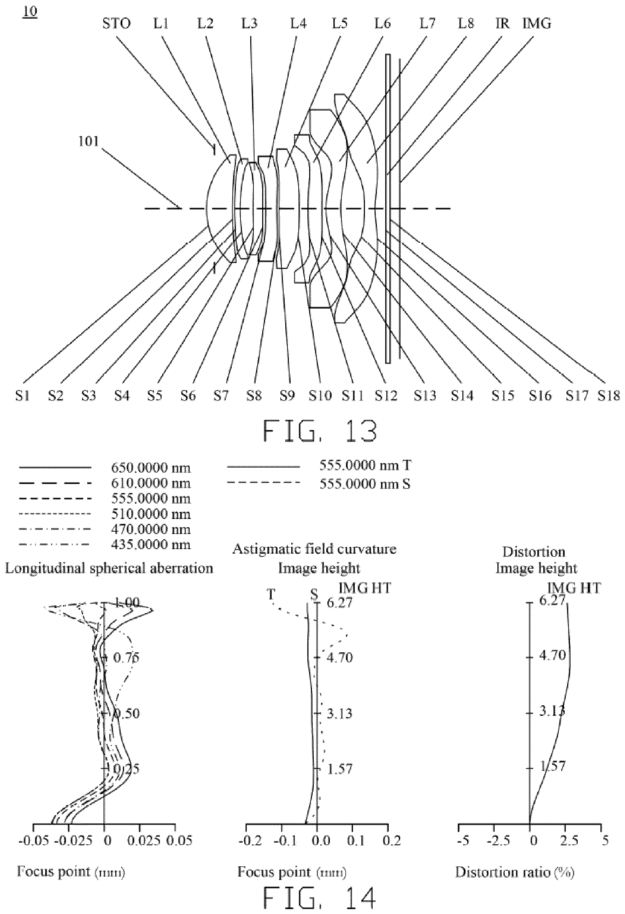

Referring to FIG. 13, the overall structure of the optical system 10 of this embodiment is substantially the same as that of the first embodiment, and the same contents can be referred to in the first embodiment, so it will not be repeated. The remaining differences are detailed in the table.

Table 5a

| Fifth embodiment | | | | | | | | |
|---|---|---|---|---|---|---|---|---|
| EFL=7.16, FNO=1.4~2.0~4.0, FOV=80.66, TTL=9.17 | | | | | | | | |
| Surface numeral | Surface name | Surface type | Y radius mm | Thickness mm | Material | refractive index | Abbe number | Focal length |
| | object side | sphere | infinity | infinity | | | | |
| STO | aperture stop | sphere | infinity | A | | | | |
| S1 | L1 | asphere | 3.274 | 1.228 | plastic | 1.537 | 55.770 | 7.537 |
| S2 | | asphere | 14.952 | 0.100 | | | | |
| S3 | L2 | asphere | 11.404 | 0.260 | plastic | 1.694 | 18.400 | -25.192 |
| S4 | | asphere | 6.837 | 0.613 | | | | |
| S5 | L3 | asphere | 26.036 | 0.464 | plastic | 1.546 | 55.930 | 41.033 |
| S6 | | asphere | -159.754 | 0.130 | | | | |
| S7 | L4 | asphere | -318.773 | 0.536 | plastic | 1.694 | 18.400 | -20.765 |
| S8 | | asphere | 15.102 | 0.100 | | | | |
| S9 | L5 | asphere | 22.408 | 0.954 | plastic | 1.546 | 55.930 | 32.671 |
| S10 | | asphere | -86.218 | 0.432 | | | | |
| S11 | L6 | asphere | 16.163 | 0.657 | plastic | 1.569 | 37.710 | 31627.987 |
| S12 | | asphere | 15.939 | 0.182 | | | | |
| S13 | L7 | asphere | 2.642 | 0.709 | plastic | 1.546 | 55.930 | 9.106 |
| S14 | | asphere | 5.104 | 1.120 | | | | |
| S15 | L8 | asphere | -25.080 | 0.506 | plastic | 1.537 | 55.770 | -5.673 |
| S16 | | asphere | 3.489 | 0.512 | | | | |
| S17 | IR | sphere | infinity | 0.210 | glass | 1.518 | 64.170 | |
| S18 | | sphere | infinity | 0.424 | | | | |

(continued)

| Fifth embodiment | | | | | | | | |
|---|---|---|---|---|---|---|---|---|
| EFL=7.16, FNO=1.4~2.0~4.0, FOV=80.66, TTL=9.17 | | | | | | | | |
| Surface numeral | Surface name | Surface type | Y radius mm | Thickness mm | Material | refractive index | Abbe number | Focal length |
| IMG | imaging surface | sphere | infinity | 0.034 | | | | |
| | | | | | | | | |
| Reference wavelength is 555.0 nm | | | | | | | | |

Table 5b

| Adjustable aperture | First aperture state | Second aperture state | Third aperture state |
|---|---|---|---|
| FNO | 1.40 | 2.00 | 4.00 |
| A | -0.38 | 0.38 | 0.38 |

Table 5c shows the coefficients of high-order terms that can be used for each aspherical mirror surface in the fifth embodiment, wherein each aspherical surface shape can be defined by the formula provided in the first embodiment.

Table 5c

| Surface numeral | k | A4 | A6 | A8 | A10 |
|---|---|---|---|---|---|
| S1 | 1.93670E-04 | 2.16160E-03 | 1.95097E-01 | -1.09258E+00 | 4.41176E+00 |
| S2 | -3.90585E-02 | -2.23408E-02 | -7.29728E-01 | 4.84619E+00 | -1.74891E+01 |
| S3 | 3.01277E-02 | -1.52466E-01 | -8.33337E-02 | -2.11353E+00 | 3.78543E+01 |
| S4 | -9.75723E-03 | -6.75935E-02 | 1.39940E-01 | -3.59047E+00 | 3.30519E+01 |
| S5 | 4.89827E-01 | -1.04573E-01 | -1.70570E-01 | 8.82475E-01 | -2.17526E+01 |
| S6 | 7.03919E+01 | 1.86175E-01 | -2.96308E+00 | 2.08982E+01 | -1.21453E+02 |
| S7 | -6.93738E+01 | -1.10580E-02 | -8.46980E-01 | -1.08685E+00 | 4.83833E+01 |
| S8 | -1.55712E-01 | -3.79211E-01 | -2.76700E+00 | 4.55163E+01 | -3.91399E+02 |
| S9 | 3.81686E-01 | -5.50983E-01 | -4.68674E+00 | 8.48044E+01 | -7.16907E+02 |
| S10 | 1.78199E+01 | -2.79001E-01 | -7.86977E+00 | 8.63901E+01 | -6.54194E+02 |
| S11 | -1.09040E+00 | 1.30691E+00 | -1.66058E+01 | 1.30867E+02 | -7.89632E+02 |
| S12 | 3.73843E-02 | -3.92246E+00 | 8.14412E+00 | 5.82359E+01 | -7.79310E+02 |
| S13 | -1.24119E+00 | -8.21301E+00 | 5.15707E+01 | -5.04725E+02 | 4.08190E+03 |
| S14 | -8.89906E-05 | -2.02522E+00 | -6.46896E+00 | -2.74139E+02 | 4.86000E+03 |
| S15 | 3.07045E-02 | -4.45712E+01 | 4.22939E+02 | -3.00667E+03 | 1.51625E+04 |
| S16 | -2.04970E+01 | -2.27437E+01 | 1.86002E+02 | -1.09912E+03 | 4.42624E+03 |
| Surface numeral | A12 | A14 | A16 | A18 | A20 |
| S1 | -1.15553E+01 | 1.97263E+01 | -2.09472E+01 | 1.24932E+01 | -3.21760E+00 |
| S2 | 4.12636E+01 | -6.38618E+01 | 6.17383E+01 | -3.33590E+01 | 7.59449E+00 |
| S3 | -2.68872E+02 | 1.19629E+03 | -3.66580E+03 | 7.98899E+03 | -1.24861E+04 |
| S4 | -1.69532E+02 | 5.56612E+02 | -1.20709E+03 | 1.68615E+03 | -1.31754E+03 |
| S5 | 1.60585E+02 | -6.69724E+02 | 1.82763E+03 | -3.45761E+03 | 4.64794E+03 |
| S6 | 4.39706E+02 | -9.17069E+02 | 7.16967E+02 | 1.57028E+03 | -5.84760E+03 |
| S7 | -4.33248E+02 | 2.15666E+03 | -6.92724E+03 | 1.52508E+04 | -2.35872E+04 |

(continued)

| Surface numeral | A12 | A14 | A16 | A18 | A20 |
|---|---|---|---|---|---|
| S8 | 2.16821E+03 | -8.46977E+03 | 2.41416E+04 | -5.05568E+04 | 7.72585E+04 |
| S9 | 3.90947E+03 | -1.52559E+04 | 4.43780E+04 | -9.67942E+04 | 1.56122E+05 |
| S10 | 3.63568E+03 | -1.49523E+04 | 4.54296E+04 | -1.01573E+05 | 1.65918E+05 |
| S11 | 3.57477E+03 | -1.20334E+04 | 2.94215E+04 | -5.08471E+04 | 5.96788E+04 |
| S12 | 5.27027E+03 | -2.53008E+04 | 8.68344E+04 | -2.10002E+05 | 3.55256E+05 |
| S13 | -2.39554E+04 | 9.97066E+04 | -2.97666E+05 | 6.40537E+05 | -9.88900E+05 |
| S14 | -4.09555E+04 | 2.09978E+05 | -7.07317E+05 | 1.62842E+06 | -2.61257E+06 |
| S15 | -4.66647E+04 | 7.62544E+04 | -2.14686E+04 | -1.77471E+05 | 4.12813E+05 |
| S16 | -1.18230E+04 | 2.00506E+04 | -1.73334E+04 | -7.80879E+03 | 4.83966E+04 |
| Surface numeral | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 1.38902E+04 | -1.07266E+04 | 5.45900E+03 | -1.64439E+03 | 2.21801E+02 |
| S4 | 1.28497E+02 | 8.63537E+02 | -9.06894E+02 | 4.10695E+02 | -7.39340E+01 |
| S5 | -4.45565E+03 | 2.99700E+03 | -1.35326E+03 | 3.70857E+02 | -4.68870E+01 |
| S6 | 9.10850E+03 | -8.39972E+03 | 4.73485E+03 | -1.51405E+03 | 2.11157E+02 |
| S7 | 2.56747E+04 | -1.92930E+04 | 9.53766E+03 | -2.79322E+03 | 3.67317E+02 |
| S8 | -8.47493E+04 | 6.48093E+04 | -3.27545E+04 | 9.82580E+03 | -1.32436E+03 |
| S9 | -1.81734E+05 | 1.47422E+05 | -7.87589E+04 | 2.48569E+04 | -3.50781E+03 |
| S10 | -1.95175E+05 | 1.60794E+05 | -8.79938E+04 | 2.87227E+04 | -4.23091E+03 |
| S11 | -4.37513E+04 | 1.52200E+04 | 2.42376E+03 | -4.04251E+03 | 1.02864E+03 |
| S12 | -4.16380E+05 | 3.30770E+05 | -1.69861E+05 | 5.08821E+04 | -6.75495E+03 |
| S13 | 1.08050E+06 | -8.13334E+05 | 4.00578E+05 | -1.16099E+05 | 1.50060E+04 |
| S14 | 2.92743E+06 | -2.25175E+06 | 1.13555E+06 | -3.38734E+05 | 4.53742E+04 |
| S15 | -4.79257E+05 | 3.35196E+05 | -1.41957E+05 | 3.32781E+04 | -3.25882E+03 |
| S16 | -7.68744E+04 | 7.16669E+04 | -4.18238E+04 | 1.42083E+04 | -2.15182E+03 |

FIG. 14 (the first aperture state) shows a longitudinal spherical aberration curve diagram, an astigmatism curve diagram and a distortion curve diagram of the optical system 10 in the fifth embodiment. From the figure, the longitudinal spherical aberration, astigmatism, and distortion of the optical system 10 are well controlled, such that the optical system 10 of this embodiment has good imaging quality. Considering that reducing the aperture can improve the image quality without triggering the diffraction limit, the imaging quality of the optical system 10 of the fifth embodiment in other aperture states is also excellent.

Sixth embodiment

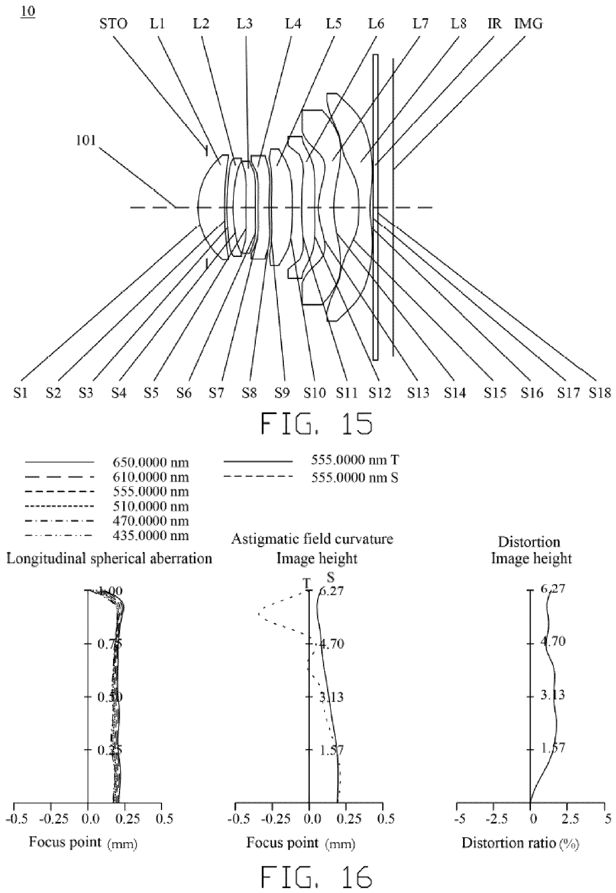

Referring to FIG. 15, the overall structure of the optical system 10 of this embodiment is substantially the same as that of the first embodiment, and the same contents can be referred to in the first embodiment, so it will not be repeated. The remaining differences are detailed in the table.

Table 6a

| Sixth embodiment | | | | | | | | |
|---|---|---|---|---|---|---|---|---|
| EFL=6.896, FNO=1.4~2.0~4.0, FOV=85.0, TTL=8.598 | | | | | | | | |
| Surface numeral | Surface name | Surface type | Y radius mm | Thickness mm | Material | refractive index | Abbe number | Focal length |
| | object side | sphere | infinity | infinity | | | | |
| STO | aperture stop | sphere | infinity | A | | | | |
| S1 | L1 | asphere | 3.266 | 1.163 | plastic | 1.537 | 55.770 | 7.573 |
| S2 | | asphere | 14.581 | 0.100 | | | | |
| S3 | L2 | asphere | 10.542 | 0.273 | plastic | 1.694 | 18.400 | -26.541 |
| S4 | | asphere | 6.633 | 0.564 | | | | |
| S5 | L3 | asphere | 24.648 | 0.418 | plastic | 1.546 | 55.930 | 110.946 |
| S6 | | asphere | 41.304 | 0.117 | | | | |
| S7 | L4 | asphere | 34.457 | 0.488 | plastic | 1.694 | 18.400 | -33.057 |
| S8 | | asphere | 13.691 | 0.101 | | | | |
| S9 | L5 | asphere | 19.805 | 0.918 | plastic | 1.546 | 55.930 | 27.296 |
| S10 | | asphere | -59.263 | 0.407 | | | | |
| S11 | L6 | asphere | 18.013 | 0.589 | plastic | 1.569 | 37.710 | -148.055 |
| S12 | | asphere | 14.663 | 0.161 | | | | |
| S13 | L7 | asphere | 2.600 | 0.683 | plastic | 1.546 | 55.930 | 8.826 |
| S14 | | asphere | 5.120 | 1.100 | | | | |
| S15 | L8 | asphere | -25.319 | 0.479 | plastic | 1.537 | 55.770 | -6.030 |
| S16 | | asphere | 3.734 | 0.148 | | | | |
| S17 | IR | sphere | infinity | 0.210 | glass | 1.518 | 64.170 | |
| S18 | | sphere | infinity | 0.646 | | | | |
| IMG | imaging surface | sphere | infinity | 0.034 | | | | |
| Reference wavelength is 555.0 nm | | | | | | | | |

Table 6b

| Adjustable aperture | First aperture state | Second aperture state | Third aperture state |
|---|---|---|---|
| FNO | 1.40 | 2.00 | 4.00 |
| A | -0.38 | 0.38 | 0.38 |

Table 6c shows the coefficients of high-order terms that can be used for each aspherical mirror surface in the sixth embodiment, wherein each aspherical surface shape can be defined by the formula provided in the first embodiment.

Table 6c

| Surface numeral | k | A4 | A6 | A8 | A10 |
|---|---|---|---|---|---|
| S1 | 5.62659E-03 | 2.52623E-02 | -8.69936E-02 | 6.52283E-01 | -2.42658E+00 |
| S2 | -1.15190E+00 | -6.19323E-02 | -1.97940E-01 | 1.74872E+00 | -7.08562E+00 |
| S3 | 2.16465E-02 | -1.94808E-01 | 1.63515E+00 | -2.85762E+01 | 2.70974E+02 |
| S4 | -1.40717E-02 | -4.60256E-02 | -8.27085E-01 | 1.07051E+01 | -8.23210E+01 |

(continued)

| Surface numeral | k | A4 | A6 | A8 | A10 |
|---|---|---|---|---|---|
| S5 | -7.06825E-01 | -1.09256E-01 | 1.19379E-01 | -2.22569E+00 | -1.63909E+01 |
| S6 | 1.03543E+02 | 2.12826E-01 | -4.54815E+00 | 5.28725E+01 | -4.69279E+02 |
| S7 | -3.52227E+01 | 8.46814E-04 | -1.33526E+00 | 7.89015E+00 | -5.21779E+01 |
| S8 | 4.47745E-01 | -4.83185E-01 | 1.14457E+00 | -1.33293E+01 | 1.25079E+02 |
| S9 | -1.15464E+00 | -5.56999E-01 | -3.21874E+00 | 6.78621E+01 | -6.28131E+02 |
| S10 | 4.91441E+01 | -1.98189E-01 | -7.42267E+00 | 6.11781E+01 | -3.04082E+02 |
| S11 | 4.03133E+00 | 1.40972E+00 | -1.84457E+01 | 1.51481E+02 | -9.09057E+02 |
| S12 | -1.74166E-01 | -3.34272E+00 | 3.43795E+00 | 9.75563E+01 | -1.03182E+03 |
| S13 | -1.24199E+00 | -8.18952E+00 | 4.83684E+01 | -4.54703E+02 | 3.62827E+03 |
| S14 | -1.66274E-03 | -2.46254E+00 | 8.19124E+00 | -4.71045E+02 | 6.36597E+03 |
| S15 | -1.22888E+00 | -4.52285E+01 | 4.27479E+02 | -3.00234E+03 | 1.49399E+04 |
| S16 | -1.88668E+01 | -2.22583E+01 | 1.59453E+02 | -5.88506E+02 | -7.70389E+02 |
| Surface numeral | A12 | A14 | A16 | A18 | A20 |
| S1 | 5.67052E+00 | -7.82202E+00 | 5.96292E+00 | -2.14165E+00 | 1.91377E-01 |
| S2 | 1.94730E+01 | -3.47915E+01 | 3.75235E+01 | -2.18371E+01 | 5.21198E+00 |
| S3 | -1.57688E+03 | 6.14011E+03 | -1.66713E+04 | 3.22020E+04 | -4.44975E+04 |
| S4 | 4.25473E+02 | -1.54894E+03 | 4.09421E+03 | -7.97272E+03 | 1.14562E+04 |
| S5 | 2.74556E+02 | -1.68013E+03 | 6.10131E+03 | -1.46883E+04 | 2.43949E+04 |
| S6 | 2.77001E+03 | -1.12562E+04 | 3.24041E+04 | -6.70895E+04 | 1.00244E+05 |
| S7 | 2.73945E+02 | -1.17506E+03 | 3.99990E+03 | -1.02047E+04 | 1.88060E+04 |
| S8 | -7.87209E+02 | 3.18784E+03 | -8.51053E+03 | 1.53245E+04 | -1.87380E+04 |
| S9 | 3.69467E+03 | -1.51240E+04 | 4.45501E+04 | -9.53275E+04 | 1.47540E+05 |
| S10 | 9.38759E+02 | -1.59839E+03 | 3.28817E+02 | 5.33860E+03 | -1.39038E+04 |
| S11 | 3.93433E+03 | -1.23920E+04 | 2.83777E+04 | -4.68805E+04 | 5.48947E+04 |
| S12 | 6.19292E+03 | -2.59594E+04 | 7.78362E+04 | -1.66612E+05 | 2.53126E+05 |
| S13 | -2.13355E+04 | 8.95749E+04 | -2.70719E+05 | 5.90456E+05 | -9.23335E+05 |
| S14 | -4.81160E+04 | 2.31861E+05 | -7.49845E+05 | 1.67573E+06 | -2.62537E+06 |
| S15 | -4.50594E+04 | 7.01669E+04 | -9.28251E+03 | -1.83970E+05 | 3.85083E+05 |
| S16 | 2.13038E+04 | -1.22878E+05 | 4.17177E+05 | -9.57315E+05 | 1.54783E+06 |
| Surface numeral | A22 | A24 | A26 | A28 | A30 |
| S1 | 0.00000E+00 | 0.00000E+00 | 0.00000E+00 | 0.00000E+00 | 0.00000E+00 |
| S2 | 0.00000E+00 | 0.00000E+00 | 0.00000E+00 | 0.00000E+00 | 0.00000E+00 |
| S3 | 4.36376E+04 | -2.96254E+04 | 1.32219E+04 | -3.48422E+03 | 4.10019E+02 |
| S4 | -1.20101E+04 | 8.93512E+03 | -4.46880E+03 | 1.34672E+03 | -1.84643E+02 |
| S5 | -2.81849E+04 | 2.22968E+04 | -1.15332E+04 | 3.51723E+03 | -4.79776E+02 |
| S6 | -1.07151E+05 | 7.99159E+04 | -3.95077E+04 | 1.16368E+04 | -1.54621E+03 |
| S7 | -2.44509E+04 | 2.18036E+04 | -1.26767E+04 | 4.32700E+03 | -6.57761E+02 |
| S8 | 1.53048E+04 | -7.91188E+03 | 2.25192E+03 | -2.05556E+02 | -2.86515E+01 |
| S9 | -1.62707E+05 | 1.24246E+05 | -6.23127E+04 | 1.84451E+04 | -2.44107E+03 |

(continued)

| Surface numeral | A22 | A24 | A26 | A28 | A30 |
|---|---|---|---|---|---|
| S10 | 1.85338E+04 | -1.47984E+04 | 6.98093E+03 | -1.72627E+03 | 1.55957E+02 |
| S11 | -4.39828E+04 | 2.24373E+04 | -6.11641E+03 | 3.62048E+02 | 1.39413E+02 |
| S12 | -2.69712E+05 | 1.96626E+05 | -9.33226E+04 | 2.59748E+04 | -3.21705E+03 |
| S13 | 1.02006E+06 | -7.74569E+05 | 3.83852E+05 | -1.11638E+05 | 1.44380E+04 |
| S14 | 2.88232E+06 | -2.17624E+06 | 1.07829E+06 | -3.16168E+05 | 4.16344E+04 |
| S15 | -4.02013E+05 | 2.38202E+05 | -7.33669E+04 | 6.83204E+03 | 1.08699E+03 |
| S16 | -1.77359E+06 | 1.41302E+06 | -7.45109E+05 | 2.33859E+05 | -3.30703E+04 |

FIG. 16 (the first aperture state) shows a longitudinal spherical aberration curve diagram, an astigmatism curve diagram and a distortion curve diagram of the optical system 10 in the sixth embodiment. From the figure, the longitudinal spherical aberration, astigmatism, and distortion of the optical system 10 are well controlled, such that the optical system 10 of this embodiment has good imaging quality. Considering that reducing the aperture can improve the image quality without triggering the diffraction limit, the imaging quality of the optical system 10 of the sixth embodiment in other aperture states is also excellent.

Seventh embodiment

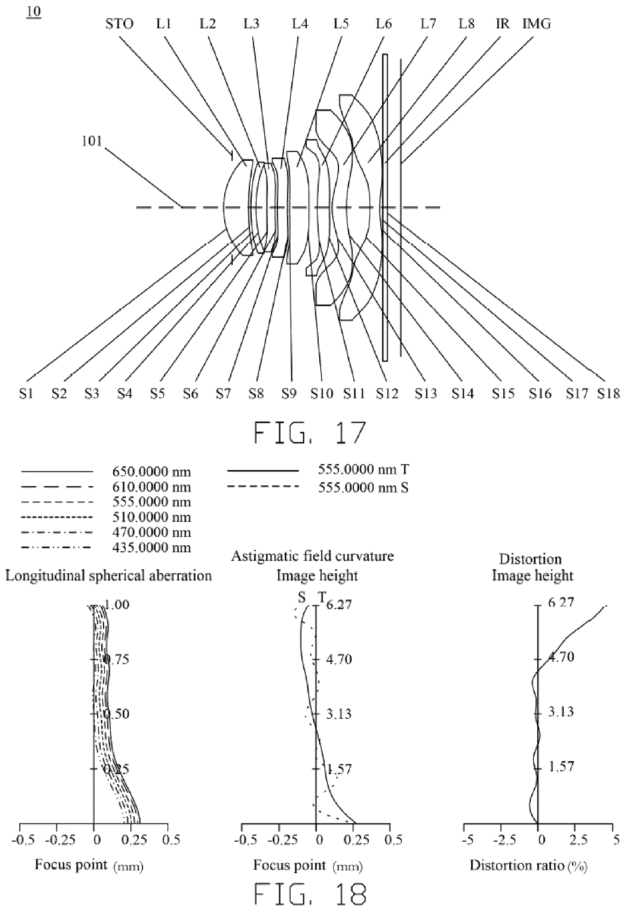

Referring to FIG. 17, the overall structure of the optical system 10 of this embodiment is substantially the same as that of the first embodiment, and the same contents can be referred to in the first embodiment, so it will not be repeated. The remaining differences are detailed in the table.

Table 7a

| Sixth embodiment | | | | | | | | |
|---|---|---|---|---|---|---|---|---|
| EFL=6.344, FNO=1.4~2.0~4.0, FOV=88.83, TTL=8.0 | | | | | | | | |
| Surface numeral | Surface name | Surface type | Y radius mm | Thickness mm | Material | refractive index | Abbe number | Focal length |
| | object side | sphere | infinity | infinity | | | | |
| STO | aperture stop | sphere | infinity | A | | | | |
| S1 | L1 | asphere | 3.240 | 1.124 | plastic | 1.537 | 55.770 | 8.499 |
| S2 | | asphere | 9.835 | 0.100 | | | | |
| S3 | L2 | asphere | 6.320 | 0.236 | plastic | 1.694 | 18.400 | -62.871 |
| S4 | | asphere | 5.436 | 0.344 | | | | |
| S5 | L3 | asphere | 22.960 | 0.379 | plastic | 1.546 | 55.930 | 474.767 |
| S6 | | asphere | 25.044 | 0.100 | | | | |
| S7 | L4 | asphere | 17.322 | 0.447 | plastic | 1.694 | 18.400 | -75.976 |
| S8 | | asphere | 12.900 | 0.100 | | | | |
| S9 | L5 | asphere | 22.598 | 0.877 | plastic | 1.546 | 55.930 | 39.249 |
| S10 | | asphere | -410.044 | 0.368 | | | | |
| S11 | L6 | asphere | 15.368 | 0.549 | plastic | 1.569 | 37.710 | -1276.210 |
| S12 | | asphere | 14.855 | 0.124 | | | | |
| S13 | L7 | asphere | 2.609 | 0.647 | plastic | 1.546 | 55.930 | 8.802 |
| S14 | | asphere | 5.208 | 1.064 | | | | |

(continued)

| Sixth embodiment | | | | | | | | |
|---|---|---|---|---|---|---|---|---|
| EFL=6.344, FNO=1.4~2.0~4.0, FOV=88.83, TTL=8.0 | | | | | | | | |
| Surface numeral | Surface name | Surface type | Y radius mm | Thickness mm | Material | refractive index | Abbe number | Focal length |
| | object side | sphere | infinity | infinity | | | | |
| S15 | L8 | asphere | -25.567 | 0.439 | plastic | 1.537 | 55.770 | -7.310 |
| S16 | | asphere | 4.661 | 0.107 | | | | |
| S17 | IR | sphere | infinity | 0.210 | glass | 1.518 | 64.170 | |
| S18 | | sphere | infinity | 0.604 | | | | |
| IMG | imaging surface | sphere | infinity | 0.034 | | | | |
| | | | | | | | | |
| Reference wavelength is 555.0 nm | | | | | | | | |

Table 7b

| Adjustable aperture | First aperture state | Second aperture state | Third aperture state |
|---|---|---|---|
| FNO | 1.40 | 2.00 | 4.00 |
| A | -0.38 | 0.38 | 0.38 |

Table 7c shows the coefficients of high-order terms that can be used for each aspherical mirror surface in the seventh embodiment, wherein each aspherical surface shape can be defined by the formula provided in the first embodiment.

Table 7c

| Surface numeral | k | A4 | A6 | A8 | A10 |
|---|---|---|---|---|---|
| S1 | 9.99676E-03 | 3.27016E-02 | -3.16767E-01 | 1.92163E+00 | -6.15150E+00 |
| S2 | -1.66807E+00 | -4.98281E-02 | 1.48387E-01 | -9.62979E-01 | 3.51877E+00 |
| S3 | -3.08823E-01 | -1.32891E-01 | 7.67206E-01 | -9.42895E+00 | 7.14665E+01 |
| S4 | 2.34954E-01 | -2.63387E-01 | 5.79274E+00 | -8.92494E+01 | 8.37010E+02 |
| S5 | 2.01772E+01 | -3.38011E-01 | 6.61817E+00 | -7.44229E+01 | 4.62275E+02 |
| S6 | 7.30088E+01 | -3.33235E-01 | 1.15318E+01 | -1.59309E+02 | 1.24854E+03 |
| S7 | 1.13856E+01 | -2.78572E-01 | 9.02644E+00 | -1.60821E+02 | 1.56256E+03 |
| S8 | 5.28049E+00 | -4.97641E-01 | 3.97386E+00 | -5.53317E+01 | 5.03982E+02 |
| S9 | 4.13575E-01 | -6.43795E-01 | 2.36836E+00 | 8.91640E+00 | -2.33792E+02 |
| S10 | 6.46553E+02 | -4.54572E-01 | -1.96515E+00 | 2.30939E+01 | -2.02468E+02 |
| S11 | 3.66862E+00 | 2.87739E+00 | -4.91746E+01 | 5.65618E+02 | -4.36044E+03 |
| S12 | -8.94792E-02 | -4.35686E+00 | 2.09612E+01 | 4.62660E+01 | -1.93450E+03 |
| S13 | -1.24210E+00 | -4.34076E+00 | -7.95047E+01 | 1.71228E+03 | -1.83611E+04 |
| S14 | -6.11276E-03 | -7.35966E+00 | 1.87581E+02 | -3.56418E+03 | 3.69291E+04 |
| S15 | -1.40255E+00 | -4.02809E+01 | 3.78222E+02 | -2.74892E+03 | 1.48259E+04 |
| S16 | -1.63207E+01 | 1.74071E+00 | -5.34561E+02 | 8.88634E+03 | -7.72111E+04 |

(continued)

| Surface numeral | A12 | A14 | A16 | A18 | A20 |
|---|---|---|---|---|---|
| S1 | 1.17381E+01 | -1.36550E+01 | 9.50153E+00 | -3.62091E+00 | 5.74596E-01 |
| S2 | -6.80503E+00 | 7.50034E+00 | -4.72762E+00 | 1.58393E+00 | -2.19586E-01 |
| S3 | -3.58526E+02 | 1.25362E+03 | -3.10801E+03 | 5.49879E+03 | -6.93120E+03 |
| S4 | -5.16481E+03 | 2.19658E+04 | -6.61286E+04 | 1.42858E+05 | -2.21994E+05 |
| S5 | -1.84005E+03 | 4.98674E+03 | -9.53899E+03 | 1.32009E+04 | -1.34753E+04 |
| S6 | -6.63805E+03 | 2.52192E+04 | -6.97817E+04 | 1.41277E+05 | -2.08281E+05 |
| S7 | -9.86416E+03 | 4.27759E+04 | -1.31054E+05 | 2.87626E+05 | -4.53368E+05 |
| S8 | -3.11129E+03 | 1.32428E+04 | -3.95522E+04 | 8.39447E+04 | -1.27089E+05 |
| S9 | 1.67039E+03 | -6.81392E+03 | 1.82171E+04 | -3.36104E+04 | 4.35864E+04 |
| S10 | 1.11029E+03 | -3.83845E+03 | 8.66885E+03 | -1.29685E+04 | 1.26146E+04 |
| S11 | 2.25895E+04 | -8.10901E+04 | 2.06765E+05 | -3.80023E+05 | 5.05339E+05 |
| S12 | 1.67353E+04 | -8.12785E+04 | 2.55499E+05 | -5.48138E+05 | 8.19650E+05 |
| S13 | 1.22973E+05 | -5.53810E+05 | 1.74049E+06 | -3.89658E+06 | 6.25969E+06 |
| S14 | -2.39808E+05 | 1.04163E+06 | -3.13784E+06 | 6.69060E+06 | -1.01753E+07 |
| S15 | -5.48013E+04 | 1.44858E+05 | -2.98006E+05 | 5.08710E+05 | -7.18449E+05 |
| S16 | 4.23105E+05 | -1.57168E+06 | 4.10368E+06 | -7.66638E+06 | 1.02919E+07 |
| Surface numeral | A22 | A24 | A26 | A28 | A30 |
| S1 | 0.0000E+00 | 0.0000E+00 | 0.0000E+00 | 0.0000E+00 | 0.0000E+00 |
| S2 | 0.0000E+00 | 0.0000E+00 | 0.0000E+00 | 0.0000E+00 | 0.0000E+00 |
| S3 | 6.1509E+03 | -3.7400E+03 | 1.4773E+03 | -3.4005E+02 | 3.4443E+01 |
| S4 | 2.4577E+05 | -1.8896E+05 | 9.5806E+04 | -2.8787E+04 | 3.8805E+03 |
| S5 | 1.0305E+04 | -5.9243E+03 | 2.4802E+03 | -6.7751E+02 | 8.9276E+01 |
| S6 | 2.2039E+05 | -1.6266E+05 | 7.9377E+04 | -2.2989E+04 | 2.9895E+03 |
| S7 | 5.0845E+05 | -3.9558E+05 | 2.0278E+05 | -6.1551E+04 | 8.3748E+03 |
| S8 | 1.3617E+05 | -1.0081E+05 | 4.9020E+04 | -1.4082E+04 | 1.8105E+03 |
| S9 | -3.9646E+04 | 2.4757E+04 | -1.0104E+04 | 2.4264E+03 | -2.5995E+02 |
| S10 | -7.3751E+03 | 1.8964E+03 | 3.6560E+02 | -3.5627E+02 | 6.3809E+01 |
| S11 | -4.8200E+05 | 3.2165E+05 | -1.4265E+05 | 3.7789E+04 | -4.5281E+03 |
| S12 | -8.5501E+05 | 6.1046E+05 | -2.8452E+05 | 7.8025E+04 | -9.5517E+03 |
| S13 | -7.1679E+06 | 5.7118E+06 | -3.0093E+06 | 9.4197E+05 | -1.3259E+05 |
| S14 | 1.0977E+07 | -8.2122E+06 | 4.0550E+06 | -1.1893E+06 | 1.5700E+05 |
| S15 | 7.9096E+05 | -6.2973E+05 | 3.3429E+05 | -1.0494E+05 | 1.4681E+04 |
| S16 | -9.8420E+06 | 6.5371E+06 | -2.8633E+06 | 7.4285E+05 | -8.6362E+04 |

FIG. 18 (the first aperture state) shows a longitudinal spherical aberration curve diagram, an astigmatism curve diagram and a distortion curve diagram of the optical system 10 in the seventh embodiment. From the figure, the longitudinal spherical aberration, astigmatism, and distortion of the optical system 10 are well controlled, such that the optical system 10 of this embodiment has good imaging quality. Considering that reducing the aperture can improve the image quality without triggering the diffraction limit, the imaging quality of the optical system 10 of the seventh embodiment in other aperture states is also excellent.

Table 8 shows values of a plurality of relational expressions in the optical systems of the first to seventh embodiments.

Table 8

| Formula | First embodiment | Second embodiment | Third embodiment | Fourth embodiment | Fifth embodiment | Sixth embodiment | Seventh embodiment |
|---|---|---|---|---|---|---|---|
| f1/f | 1.053 | 1.058 | 1.068 | 1.000 | 1.053 | 1.098 | 1.340 |
| f2/f | -3.525 | -3.580 | -3.634 | -2.970 | -3.518 | -3.849 | -9.911 |
| f3/f | 5.762 | 5.820 | 8.636 | 4.375 | 5.731 | 16.089 | 74.839 |
| f4/f | -2.905 | -2.887 | -3.482 | -2.310 | -2.900 | -4.794 | -11.976 |
| f5/f | 4.032 | 3.887 | 3.764 | 3.795 | 4.563 | 3.958 | 6.187 |
| \|f6\|/f | -20.170 | -20.517 | -20.626 | -40.527 | 4417.317 | -21.471 | -201.172 |
| f7/f | 1.241 | 1.234 | 1.244 | 1.222 | 1.272 | 1.280 | 1.388 |
| f8/f | -0.787 | -0.744 | -0.751 | -0.733 | -0.792 | -0.874 | -1.152 |
| R1/f | 0.457 | 0.459 | 0.463 | 0.447 | 0.457 | 0.474 | 0.511 |
| R2/f | 2.089 | 2.085 | 2.098 | 2.312 | 2.088 | 2.115 | 1.550 |
| R3/f | 1.591 | 1.574 | 1.535 | 1.888 | 1.593 | 1.529 | 0.996 |
| R4/f | 0.955 | 0.955 | 0.945 | 0.978 | 0.955 | 0.962 | 0.857 |
| R5/f | 3.634 | 3.554 | 3.606 | 3.183 | 3.636 | 3.574 | 3.619 |
| \|R6\|/f | -23.311 | -29.837 | 15.228 | -9.507 | -22.312 | 5.990 | 3.948 |
| \|R7\|/f | -46.956 | 943.555 | 9.777 | -6.318 | -44.521 | 4.997 | 2.730 |
| R8/f | 2.107 | 1.999 | 1.932 | 2.159 | 2.109 | 1.985 | 2.033 |
| R9/f | 3.135 | 2.867 | 2.762 | 3.528 | 3.130 | 2.872 | 3.562 |
| R10/f | -7.287 | -8.043 | -7.891 | -4.954 | -12.042 | -8.594 | -64.636 |
| R11/f | 2.566 | 2.522 | 2.539 | 2.357 | 2.257 | 2.612 | 2.423 |
| R12/f | 2.070 | 2.047 | 2.061 | 2.106 | 2.226 | 2.126 | 2.342 |
| R13/f | 0.364 | 0.364 | 0.367 | 0.356 | 0.369 | 0.377 | 0.411 |
| R14/f | 0.713 | 0.717 | 0.723 | 0.690 | 0.713 | 0.742 | 0.821 |
| R15/f | -3.504 | -3.533 | -3.546 | -3.411 | -3.503 | -3.672 | -4.030 |
| R16/f | 0.483 | 0.454 | 0.458 | 0.448 | 0.487 | 0.541 | 0.735 |
| FOV/(FNOmax -FNOmin) | 31.385 | 31.462 | 31.677 | 30.638 | 31.023 | 32.692 | 34.165 |
| FOV | 81.600 | 81.800 | 82.360 | 79.660 | 80.660 | 85.000 | 88.830 |

(continued)

| Formula | First embodiment | Second embodiment | Third embodiment | Fourth embodiment | Fifth embodiment | Sixth embodiment | Seventh embodiment |
|---|---|---|---|---|---|---|---|
| TTL/ImgH | 1.462 | 1.441 | 1.431 | 1.511 | 1.463 | 1.372 | 1.277 |
| TTL/f | 1.279 | 1.268 | 1.271 | 1.280 | 1.281 | 1.247 | 1.261 |
| ImgH/f | 0.875 | 0.880 | 0.888 | 0.847 | 0.875 | 0.909 | 0.988 |
| DL/TTL | 0.872 | 0.878 | 0.878 | 0.875 | 0.871 | 0.879 | 0.881 |
| f8/SAG81 | 3.992 | 3.749 | 3.727 | 3.869 | 4.016 | 4.292 | 5.317 |
| f8/SAG82 | 4.002 | 3.675 | 3.441 | 3.903 | 3.942 | 4.150 | 5.841 |
| CT1/CT2 | 4.725 | 4.745 | 4.776 | 4.745 | 4.721 | 4.257 | 4.771 |
| CT4/CT3 | 1.154 | 1.119 | 1.160 | 1.166 | 1.154 | 1.168 | 1.180 |
| CT5/CT4 | 1.781 | 1.847 | 1.834 | 1.745 | 1.782 | 1.881 | 1.960 |
| CT5/CT6 | 1.469 | 1.495 | 1.533 | 1.361 | 1.453 | 1.559 | 1.598 |
| (CT1+CT2)/(CT3+CT4+CT5) | 0.761 | 0.766 | 0.756 | 0.738 | 0.761 | 0.788 | 0.798 |
| AT23/(AT12+AT34) | 2.655 | 2.696 | 2.769 | 2.821 | 2.663 | 2.595 | 2.445 |
| ET7/ET6 | 1.292 | 1.295 | 1.329 | 1.206 | 1.400 | 1.409 | 1.687 |
| ET7/CT7 | 1.348 | 1.348 | 1.346 | 1.381 | 1.377 | 1.252 | 1.136 |
| AT78/CT1 | 0.912 | 0.929 | 0.945 | 0.893 | 0.912 | 0.946 | 0.947 |
| (SAG81+SAG8 2)/CT8 | -5.607 | -5.607 | -5.845 | -4.578 | -5.641 | -5.967 | -5.976 |
| Yc72/SD72 | 0.628 | 0.637 | 0.611 | 0.609 | 0.600 | 0.600 | 0.581 |
| Yc82/SD82 | 0.380 | 0.366 | 0.344 | 0.345 | 0.326 | 0.336 | 0.327 |
| (R11+R12)/(R1 1-R12) | 9.349 | 9.628 | 9.630 | 17.784 | 143.372 | 9.755 | 58.858 |
| R15/R16 | -7.252 | -7.789 | -7.746 | -7.612 | -7.189 | -6.781 | -5.486 |
| f12/f | 1.385 | 1.389 | 1.401 | 1.375 | 1.386 | 1.425 | 1.488 |
| f345/f | 12.404 | 11.660 | 10.438 | 15.247 | 19.171 | 9.434 | 11.154 |
| \|f678\|/f | -4.782 | -3.952 | -3.981 | -4.379 | -6.315 | -7.092 | 19.828 |
| CT8/CT7 | 0.707 | 0.717 | 0.713 | 0.862 | 0.713 | 0.701 | 0.679 |

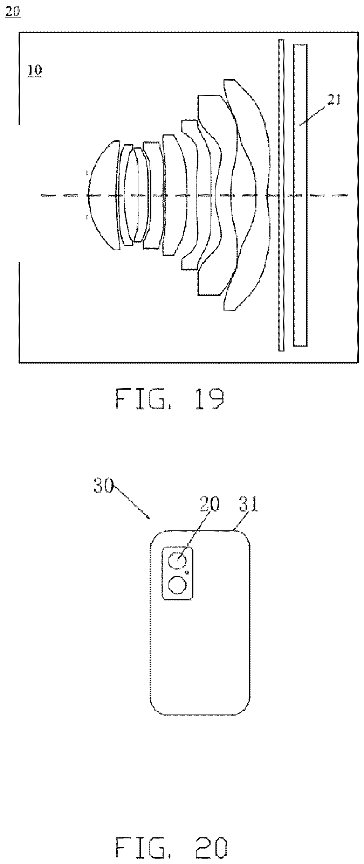

Referring to FIG. 19, an embodiment of the present disclosure further provides a camera module 20. The camera module 20 includes a photosensitive chip 21 and the optical system 10 of any one of the above embodiments. A photosensitive surface of the photosensitive chip 21 is located on the imaging surface of the optical system 10. The light of an object that passes through the lens and is incident on the photosensitive surface can be converted into an electrical signal of an image. The photosensitive chip can be a CMOS sensor Complementary Metal Oxide Semiconductor or a CCD sensor Charge Coupled Device. The camera module 20 can be an imaging module integrated into an electronic device 30 or an independent lens. By adding the optical system 10 provided by the present disclosure to the camera module 20, surface shapes and refractive power of each lens in the optical system 10 can be reasonably designed, so that the camera module 20 can meet the requirements of miniaturization, good imaging effect, and adjustable aperture.

Referring to FIG. 20, an embodiment of the present disclosure further provides the electronic device 30. The electronic device 30 includes a housing 31 and the lens module 20 of the above embodiment. The lens module 20 is disposed in the housing 31. The electronic device 30 may be, but is not limited to, a smart phone, a computer, a smart watch, or the like. By adding the camera module 20 provided by the present disclosure to the electronic device 30, the electronic device 30 can meet the requirements of miniaturization, good imaging effect, and adjustable aperture.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

**Claims**

1. An optical system (10) **characterized in that**, the optical system (10) consists of eight lenses having refractive power, from an object side to an image side along an optical axis (101), the eight lenses sequentially comprising:

   an adjustable aperture (STO) for adjusting an aperture size;
   a first lens (L1) having a positive refractive power, an object side surface (S1) of the first lens (L1) being convex near the optical axis (101), and an image side surface (S2) of the first lens (L1) being concave near the optical axis (101);
   a second lens (L2) having a negative refractive power, an object side surface (S3) of the second lens (L2) being convex near the optical axis (101), and an image side surface (S4) of the second lens (L2) being concave near the optical axis (101);
   a third lens (L3) having a positive refractive power, and an object side surface (S5) of the third lens (L3) being convex near the optical axis (101);
   a fourth lens (L4) having a negative refractive power, and an object side surface (S7) of the fourth lens (L4) being concave near the optical axis (101);
   a fifth lens (L5) having a positive refractive power, and an object side surface (S9) of the fifth lens (L5) being convex near the optical lens; and
   a sixth lens (L6) having refractive power, an object side surface (S11) of the sixth lens (L6) being convex near the optical axis (101), and an image side surface (S12) of the sixth lens (L6) being concave near the optical axis (101);
   a seventh lens (L7) having a positive refractive power, an object side surface (S13) of the seventh lens being convex near the optical axis (101), an image side surface (S14) of the seventh lens being concave near the optical axis (101), and the image side surface (S14) of the seventh lens (L7) having at least one inflection point; and
   an eighth lens (L8) having a negative refractive power, an object side surface (S15) of the eighth lens (L8) being concave near the optical axis (101), an image side surface (S16) of the eighth lens (L8) being concave near the optical axis (101), and the image side surface (S16) of the eighth lens (L8) having at least one inflection point;
   wherein the optical system (10) satisfies following relational expressions:

   $7773deg<FOV<9095deg$, and $1.24<TTL/ImgH<1.556$;
   wherein, TTL is a distance from the object side surface (S1) of the first lens (L1) to an imaging surface (IMG) of the optical system (10) along the optical axis (101), ImgH is half of an image height corresponding to the maximum field of view of the optical system (10), and FOV is a maximum field of view of the optical system (10).

2. The optical system (10) of claim 1, **characterized in that**, the optical system (10) further satisfies at least one of following relational expressions:

$$0.98<f1/f<1.45,$$

$$-11<f2/f<-2.5,$$

$$34<f3/f,$$

$$f4/f<-21.5,$$

$$23<f5/f<7,$$

$$918<|f6|/f,$$

$$1.1<f7/f<1.61.5,$$

and

$$-1.23<f8/f<-0.67;$$

wherein, f1 is an effective focal length of the first lens (L1), f2 is an effective focal length of the second lens (L2), f3 is an effective focal length of the third lens (L3), f4 is an effective focal length of the fourth lens (L4), f5 is an effective focal length of the fifth lens (L5), f6 is an effective focal length of the sixth lens (L6), f7 is an effective focal length of the seventh lens (L7), f8 is an effective focal length of the eighth lens (L8), and f is an effective focal length of the optical system (10).

3. The optical system (10) of claim 1, **characterized in that**, the optical system (10) further satisfies at least one of following relational expressions:

$$0.4<R1/f<0.55,$$

$$1.45<R2/f<2.4,$$

$$0.9<R3/f<2,$$

$$0.8<R4/f<1,$$

$$3<R5/f<4,$$

$$3.9<|R6|/f,$$

$$2.7<|R7|/f,$$

$$1.8<R8/f<2.3,$$

$$2.6<R9/f<3.7,$$

$$R10/f<-4,$$

$$2.1 < R11/f < 2.8,$$

$$1.9 < R12/f < 2.5,$$

$$0.3 < R13/f < 0.45,$$

$$0.6 < R14/f < 0.9,$$

$$-5 < R15/f < -3,$$

$$0.4 < R16/f < 0.8,$$

$$9 < (R11+R12)/(R11-R12),$$

and

$$-8 < R15/R16 < -5;$$

wherein, R1 is a curvature radius of the object side surface (S1) of the first lens (L1) at the optical axis (101), R2 is a curvature radius of the image side surface (S2) of the first lens (L1) at the optical axis (101), R3 is a curvature radius of the object side surface (S3) of the second lens (L2) at the optical axis (101), R4 is a curvature radius of the image side surface (S4) of the second lens (L2) at the optical axis (101), R5 is a curvature radius of the object side surface (S5) of the third lens (L3) at optical axis (101), R6 is a curvature radius of an image side surface (S6) of the third lens (L3) at the optical axis (101), R7 is a curvature radius of an object side surface (S7) of the fourth lens (L4) at the optical axis (101), R8 is a curvature radius of the image side surface (S8) of the fourth lens (L4) at the optical axis (101), R9 is a curvature radius of the object side surface (S9) of the fifth lens (L5) at the optical axis (101), R10 is a curvature radius of an image side surface (S10) of the fifth lens (L5) at the optical axis (101), R11 is a curvature radius of the object side surface (S11) of the sixth lens (L6) at the optical axis (101), R12 is a curvature radius of the image side surface (S12) of the sixth lens (L6) at the optical axis (101), R13 is a curvature radius of the object side surface (S13) of the seventh lens (L7) at the optical axis (101), R14 is a curvature radius of the image side surface (S14) of the seventh lens (L7) at the optical axis (101), R15 is a curvature radius of the object side surface (S15) of the eighth lens (L8) at the optical axis (101), R16 is a curvature radius of the image side surface (S16) of the eighth lens (L8) at the optical axis (101), and f is an effective focal length of the optical system (10).

4. The optical system (10) of claim 1, **characterized in that**, the optical system (10) further satisfies following relational expression:

$$1.35 < f12/f < 1.5;$$

wherein, f is an effective focal length of the optical system (10), and f12 is a combined effective focal length of the first lens (L1) and the second lens (L2).

5. The optical system (10) of claim 1, **characterized in that**, the optical system (10) further satisfies following relational expression:

$$9 < f345/f;$$

wherein, f is an effective focal length of the optical system (10), and f345 is a combined effective focal length of the third lens (L3)

6. The optical system (10) of claim 1, **characterized in that**, the optical system (10) further satisfies following relational expression:

$$3.8<|f678|/f;$$

wherein, f is an effective focal length of the optical system (10), and f678 is a combined effective focal length of the sixth lens (L6), the seventh lens (L7), and the eighth lens (L8).

7. The optical system (10) of claim 1, further satisfying following relational expression:

$$30<FOV/(FNOmax-FNOmin)<35;$$

wherein, FNOmax is a maximum aperture number of the optical system (10), and FNOmin is a minimum aperture number of the optical system (10).

8. The optical system (10) of claim 1, **characterized in that**, the optical system (10) further satisfies following relational expression:

$$1.22<TTL/f<1.3;$$

wherein, f is an effective focal length of the optical system (10.

9. The optical system (10) of claim 1, **characterized in that**, the optical system (10) further satisfies following relational expression:

$$0.82<ImgH/f<1;$$

wherein, f is an effective focal length of the optical system (10).

10. The optical system (10) of claim 1, **characterized in that**, the optical system (10) further satisfies following relational expression:

$$0.85<DL/TTL<0.9;$$

wherein, DL is a distance from the object side surface of the first lens (L1) to the image side surface (S16) of the eighth lens (L8) along the optical axis (101).

11. The optical system (10) of claim 1, **characterized in that**, the optical system (10) further satisfies at least one of following relational expressions:

$$33.5<f8/SAG81<75.5,$$

$$3<f8/SAG82<76.3,$$

and
-7-6.5<(SAG81+SAG82)/CT8<-3.5-4;wherein, f8 is an effective focal length of the eighth lens (L8), SAG81 is a sagittal height of the object side surface (S15) of the eighth lens (L8) at a maximum effective aperture, SAG 82 is a sagittal height of the image side of the eighth lens (L8) at a maximum effective aperture, and CT8 is a thickness of the eight lens on the optical axis (101).

12. The optical system (10) of claim 1, **characterized in that**, the optical system (10) further satisfies at least one of following relational expressions:

$$0.50.55<Yc72/SD72<0.70.65,$$

and
0.250.3<Yc82/SD82<0.450.4;wherein, Yc72 is a vertical height from an off-axis vertex of the image side surface (S14)

of the seventh lens (L7) to the optical axis (101), SD72 is a maximum effective aperture of the image side surface (S14) of the seventh lens (L7), Yc82 is a vertical height from an off-axis vertex of the image side surface (S16) of the eighth lens (L8) to the optical axis (101), and SD82 is a maximum effective aperture of the image side surface (S16) of the eighth lens (L8).

13. The optical system (10) of claim 1, **characterized in that**, the optical system (10) further satisfies at least one of following relational expressions:

$$3.54 < CT1/CT2 < 5.55,$$

$$11.1 < CT4/CT3 < 1.31.2,$$

$$1.51.7 < CT5/CT4 < 2.22,$$

$$1.151.3 < CT5/CT6 < 1.81.65,$$

$$0.50.6 < CT8/CT7 < 1.10.9,$$

$$2.12.3 < AT23/(AT12+AT34) < 3.12.9,$$

$$11.15 < ET7/ET6 < 1.91.75,$$

$$11.1 < ET7/CT7 < 1.61.42,$$

and

$0.70.85 < AT78/CT1 < 1.21$; wherein, AT12 is a distance from the image side surface of the first lens (L1) to the object side surface of the second lens (L2) along the optical axis (101), AT23 is a distance from the image side surface of the second lens (L2) to the object side surface (S5) of the third lens (L3) along the optical axis (101), AT34 is a distance from an image side surface (S6) of the third lens (L3) to an object side surface of the fourth lens (L4) along the optical axis (101), AT78 is a distance from the image side surface (S14) of the seventh lens (L7) to the object side surface (S15) of the eighth lens (L8) along the optical axis (101), ET6 is a distance from a position where the object side surface (S11) of the sixth lens (L6) has a maximum effective aperture to a position where the image side surface (S12) of the sixth lens (L6) has a maximum effective aperture along the optical axis (101), and ET7 is a distance from a position where the object side surface (S13) of the seventh lens (L7) has a maximum effective aperture to a position where the image side surface (S14) of the seventh lens (L7) has a maximum effective aperture, CTn is a thickness of a nth lens on the optical axis (101), and n is 1, 2, 3, 4, 5, 6, 7, or 8.

14. A camera module (20), **characterized in that**, the camera module (20) comprises the optical system (10) of any one of claims 1 to 13 and a photosensitive chip (21) located on an image side of the optical system (10).

15. An electronic device (30), **characterized in that**, the electronic device (30) comprises a housing (31) and a camera module (20) of claim 14, and the camera module (20) is located in the housing (31).

FIG. 1

| | 650.0000 nm | | 555.0000 nm T |
| | 610.0000 nm | | 555.0000 nm S |
| | 555.0000 nm | | |
| | 510.0000 nm | | |
| | 470.0000 nm | | |
| | 435.0000 nm | | |

Longitudinal spherical aberration

Astigmatic field curvature
Image height

Distortion
Image height

Focus point (mm)

Focus point (mm)

Distortion ratio (%)

FIG. 2

10

STO  L1  L2  L3  L4  L5  L6  L7  L8  IR  IMG

101

S1  S2  S3  S4  S5  S6  S7  S8  S9  S10  S11  S12  S13  S14  S15  S16  S17  S18

FIG. 3

| | |
|---|---|
| ———— 650.0000 nm | ———— 555.0000 nm T |
| — — — · 610.0000 nm | ------- 555.0000 nm S |
| - - - - - 555.0000 nm | |
| ············ 510.0000 nm | |
| —·—··—·· 470.0000 nm | |
| —··—··—·· 435.0000 nm | |

Longitudinal spherical aberration

1.00
0.75
0.50
0.25

-0.05 -0.025  0  0.025  0.05

Focus point(mm)

Astigmatic field curvature
Image height

T      S
6.27

4.70

3.13

1.57

-0.05 -0.025  0  0.025  0.05

Focus point(mm)

Distortion
Image height

6.27

4.70

3.13

1.57

-5  -2.5  0  2.5  5

Distortion ratio(%)

FIG. 4

38

FIG. 5

| | | |
|---|---|---|
| ——————— 650.0000 nm | ——————— 555.0000 nm T | |
| — — — — 610.0000 nm | — — — — — 555.0000 nm S | |
| — — — — 555.0000 nm | | |
| ·············· 510.0000 nm | | |
| —·—·—·— 470.0000 nm | | |
| —··—··—·· 435.0000 nm | | |

FIG. 6

STO  L1  L2  L3  L4  L5  L6  L7  L8  IR  IMG

101

S1  S2  S3  S4  S5  S6  S7  S8  S9  S10  S11  S12  S13  S14  S15  S16  S17  S18

FIG. 7

| | |
|---|---|
| ——————— 650.0000 nm | ——————— 555.0000 nm T |
| — — — · 610.0000 nm | - - - - - - - 555.0000 nm S |
| - - - - - - - 555.0000 nm | |
| - - - - - - - - - - 510.0000 nm | |
| - · - · - · - 470.0000 nm | |
| - · · - · · - · - 435.0000 nm | |

Longitudinal spherical aberration

Astigmatic field curvature
Image height

Distortion
Image height

1.00

0.75

0.50

0.25

-0.05 -0.025  0  0.025  0.05

Focus point (mm)

S          6.27 T

4.70

3.13

1.57

-0.05 -0.025  0  0.025  0.05

Focus point (mm)

6.27

4.70

3.13

1.57

-5  -2.5  0.0  2.5  5

Distortion ratio (%)

FIG. 8

FIG. 9

650.0000 nm
610.0000 nm
555.0000 nm
510.0000 nm
470.0000 nm
435.0000 nm

555.0000 nm T
555.0000 nm S

Astigmatic field curvature
Image height

Distortion
Image height

Longitudinal spherical aberration

Focus point (mm)

Focus point (mm)

Distortion ratio (%)

FIG. 10

10

STO L1 L2 L3 L4 L5 L6 L7 L8 IR IMG

101

S1 S2 S3 S4 S5 S6 S7 S8 S9 S10 S11 S12 S13 S14 S15 S16 S17 S18

FIG. 11

| | |
|---|---|
| ———— 650.0000 nm | ———— 555.0000 nm T |
| — — — - 610.0000 nm | - - - - - - 555.0000 nm S |
| - - - - - 555.0000 nm | |
| ............ 510.0000 nm | |
| -·-·-·- 470.0000 nm | |
| -··-··-··- 435.0000 nm | |

Longitudinal spherical aberration

1.00

0.75

0.50

0.25

-0.3 -0.15 0 0.15 0.3

Focus point (mm)

Astigmatic field curvature
Image height

S 6.27 T

4.70

3.13

1.57

-0.2 -0.1 0 0.1 0.2

Focus point (mm)

Distortion
Image height

6.27

4.70

3.13

1.57

-5 -2.5 0 2.5 5

Distortion ratio (%)

FIG. 12

42

10

STO L1 L2 L3 L4 L5 L6 L7 L8 IR IMG

101

S1 S2 S3 S4 S5 S6 S7 S8 S9 S10 S11 S12 S13 S14 S15 S16 S17 S18

FIG. 13

| | |
|---|---|
| ———————— 650.0000 nm | ———————— 555.0000 nm T |
| — — — — — 610.0000 nm | — — — — — 555.0000 nm S |
| — — — — — 555.0000 nm | |
| 510.0000 nm | |
| — · — · — · — 470.0000 nm | |
| — · · — · · — 435.0000 nm | |

Longitudinal spherical aberration

Astigmatic field curvature
Image height

Distortion
Image height

1.00

0.75

0.50

0.25

-0.05 -0.025 0 0.025 0.05

Focus point (mm)

T S IMG HT
6.27

4.70

3.13

1.57

-0.2 -0.1 0.0 0.1 0.2

Focus point (mm)

IMG HT
6.27

4.70

3.13

1.57

-5 -2.5 0 2.5 5

Distortion ratio (%)

FIG. 14

10

STO  L1  L2  L3  L4  L5  L6  L7  L8  IR  IMG

101

S1  S2  S3  S4  S5  S6  S7  S8  S9  S10  S11  S12  S13  S14  S15  S16  S17  S18

FIG. 15

650.0000 nm
610.0000 nm
555.0000 nm
510.0000 nm
470.0000 nm
435.0000 nm

555.0000 nm T
555.0000 nm S

Longitudinal spherical aberration

Astigmatic field curvature
Image height

Distortion
Image height

Focus point (mm)

Focus point (mm)

Distortion ratio (%)

FIG. 16

FIG. 17

650.0000 nm
610.0000 nm
555.0000 nm
510.0000 nm
470.0000 nm
435.0000 nm

555.0000 nm T
555.0000 nm S

Longitudinal spherical aberration

Astigmatic field curvature
Image height

Distortion
Image height

Focus point (mm)

Focus point (mm)

Distortion ratio (%)

FIG. 18

20

10

21

FIG. 19

30

20  31

FIG. 20